(19)

Europäisches Patentamt

European Patent Office

Office européen des brevets

(11) **EP 3 637 906 B1**

(12) **EUROPEAN PATENT SPECIFICATION**

(45) Date of publication and mention of the grant of the patent:
**19.03.2025 Bulletin 2025/12**

(21) Application number: **18795163.7**

(22) Date of filing: **07.05.2018**

(51) International Patent Classification (IPC):
*H04B 7/024* (2017.01)    *H04B 7/06* (2006.01)
*H04L 5/00* (2006.01)    *H04W 72/50* (2023.01)
*H04W 72/53* (2023.01)    *H04W 72/0453* (2023.01)
*H04W 72/23* (2023.01)

(52) Cooperative Patent Classification (CPC):
**H04L 5/0035; H04B 7/024; H04B 7/0697;**
**H04L 5/0053; H04W 72/53; H04W 72/535;**
H04W 72/0453; H04W 72/23

(86) International application number:
**PCT/CN2018/085844**

(87) International publication number:
**WO 2018/202201 (08.11.2018 Gazette 2018/45)**

(54) **RESOURCE ALLOCATION METHOD AND APPARATUS**

VERFAHREN UND VORRICHTUNG FÜR RESSOURCENZUWEISUNG

PROCÉDÉ ET APPAREIL D'ATTRIBUTION DE RESSOURCES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **05.05.2017  CN 201710319702**

(43) Date of publication of application:
**15.04.2020  Bulletin 2020/16**

(73) Proprietor: **ZTE Corporation**
**Shenzhen, Guangdong 518057 (CN)**

(72) Inventors:
 • **LI, Jian**
  **Shenzhen**
  **Guangdong 518057 (CN)**
 • **LI, Yu Ngok**
  **Shenzhen**
  **Guangdong 518057 (CN)**
 • **ZHANG, Nan**
  **Shenzhen**
  **Guangdong 518057 (CN)**
 • **HAO, Peng**
  **Shenzhen**
  **Guangdong 518057 (CN)**

(74) Representative: **Aipex B.V.**
**Vestdijk 51**
**5611 CA Eindhoven (NL)**

(56) References cited:
**CN-A- 101 232 697    CN-A- 101 777 940**
**CN-A- 104 919 724    US-A1- 2014 192 734**
**US-A1- 2015 172 015    US-A1- 2015 282 150**

 • **ASTRI: "Discussion on enhancement to**
  **resource allocation for NC-JT", vol. RAN WG1,**
  **no. Hangzhou, China; 20170515 - 20170519, 4**
  **May 2017 (2017-05-04), XP051261237, Retrieved**
  **from the Internet <URL:http://www.3gpp.org/ftp/**
  **tsg_ran/WG1_RL1/TSGR1_89/Docs/> [retrieved**
  **on 20170504]**
 • **ZTE ET AL: "Enhancements to control**
  **signaling", vol. RAN WG1, no. Spokane, USA;**
  **20170403 - 20170407, 2 April 2017 (2017-04-02),**
  **XP051242571, Retrieved from the Internet**
  **<URL:http://www.3gpp.org/ftp/**
  **Meetings_3GPP_SYNC/RAN1/Docs/> [retrieved**
  **on 20170402]**

EP 3 637 906 B1

- **QUALCOMM INCORPORATED: "Enhancement to control signaling for NCJT", vol. RAN WG1, no. Spokane, USA; 20170403 - 20170407, 2 April 2017 (2017-04-02), XP051243136, Retrieved from the Internet <URL:http://www.3gpp.org/ftp/ Meetings_3GPP_SYNC/RAN1/Docs/> [retrieved on 20170402]**

## Description

### TECHNICAL FIELD

The present disclosure relates to the field of communications, for example, a resource allocation method and apparatus, and a storage medium.

### BACKGROUND

In a Long Term Evolution (LTE) or Long Term Evolution-Advanced (LTE-A) system, due to the use of the orthogonal frequency division multiplexing technology, intra-cell interference is generally small. However, inter-cell frequency multiplexing results in large inter-cell interference, which becomes a major interference problem in LTE systems, resulting in poor cell-edge performance. To improve the performance of a cell-edge user and meet the needs of the cell-edge spectrum efficiency, the Coordinated Multi-Point (CoMP) transmission technology is introduced in the LTE-A system. In the CoMP technology, multiple neighboring base stations or nodes coordinate to serve one cell-edge user at the same time to reduce the co-channel interference received by the cell-edge user from neighboring cells and improve the service quality of the cell-edge user.

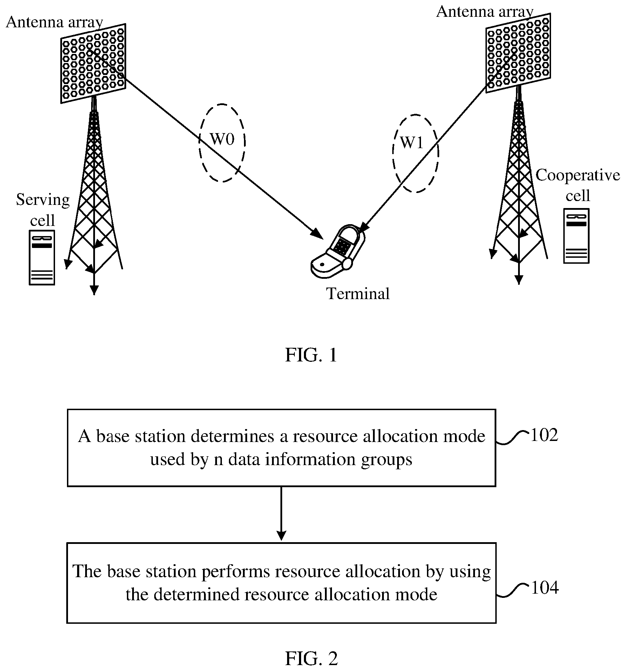

The CoMP technology is classified into three types: Joint Transmission (JT), Dynamic Node Selection (DPS)/Dynamic Node Blanking (DPB), and Coordinated Scheduling Coordinated Beamforming (CSCB). As shown in FIG. 1, for JT, the serving cell and the cooperative cell jointly provide signal transmission for the target user on the same time-frequency resource. For the terminal, the interference signal becomes a useful signal in this case, greatly improving the signal reception quality.

In the related system, the sending end uniformly indicates radio transmission resource blocks (RBs) occupied by the currently transmitted data information group (maximum 2 data information groups) by configuring the resource-allocation-related signaling (resource allocation field) in the downlink control information (DCI) in the physical downlink control channel (PDCCH)/enhanced physical downlink control channel (EPDCCH). Thus, in the application of the JT technology, multiple data information groups can only be transmitted by the serving cell and the cooperative cell on the same frequency-domain resources, severely limiting the system performance during JT transmission.

In the related art, no reasonable solution has been proposed at present to solve the problem in which multiple data information groups can only be transmitted by the serving cell and the cooperative cell on the same frequency-domain resources during JT transmission.

ASTRI: "Discussion on enhancement to resource allocation for NC-JT", 3GPP DRAFT; R1-1707188, 4 May 2017 (2017-05-04), XP051261237, provides view regarding enhancement to resource allocation for NC-JT, which includes: Proposal 1: Only fully overlapping and non-overlapping schemes should be considered when designing the enhancement to resource allocation for NC-JT; Proposal 2: Joint resource allocation indication for all the CWs/TPs based on single DCI can be designed to reduce the DCI signaling overhead; and Proposal 3: Joint resource block assignment information for fully overlapping and non-overlapping can be designed to maintain a constant bit length and further reduce the DCI signaling overhead.

### SUMMARY

Embodiments of the present application provide a resource allocation method to solve at least the problem in the related art that the system performance is severely limited because multiple data information groups can only be transmitted by the serving cell and the cooperative cell on the same frequency-domain resources during JT transmission.

The invention is set out in the appended set of claims.

### BRIEF DESCRIPTION OF DRAWINGS

FIG. 1 is a schematic diagram of a base station system in the related art.
FIG. 2 is a flowchart of a resource allocation method according to embodiments of the present application.
FIG. 3 is a flowchart of a resource allocation method according to embodiments of the present application.
FIG. 4 is a structural block diagram of a resource allocation apparatus according to embodiments of the present application.
FIG. 5 is a structural block diagram of a resource allocation apparatus according to embodiments of the present application.
FIG. 6 is a structural block diagram of a resource allocation apparatus according to embodiments of the present application.

FIG. 7 is a flowchart of a resource allocation method according to embodiments of the present application.

FIG. 8 is a schematic diagram of a completely overlapping allocation mode and a completely non-overlapping allocation mode according to embodiments of the present application.

FIG. 9 is a flowchart of a resource allocation method according to embodiments of the present application.

FIG. 10 is a schematic diagram of DCI signaling according to embodiments of the present application.

FIG. 11 is a schematic diagram of resource allocation according to embodiments of the present application.

FIG. 12 is a schematic diagram of resource allocation according to embodiments of the present application.

FIG. 13 is a schematic diagram of DCI signaling according to embodiments of the present application.

FIG. 14 is a schematic diagram of DCI signaling according to embodiments of the present application.

FIG. 15 is a schematic diagram of DCI signaling according to embodiments of the present application.

FIG. 16 is a flowchart of a resource allocation method according to embodiments of the present application.

FIG. 17 is a schematic diagram of DCI signaling according to embodiments of the present application.

FIG. 18 is a schematic diagram of resource allocation according to embodiments of the present application.

FIG. 19 is a schematic diagram of resource allocation according to embodiments of the present application.

FIG. 20 is a schematic diagram of DCI signaling according to embodiments of the present application.

FIG. 21 is a flowchart of a resource allocation method according to embodiments of the present application.

FIG. 22 is a flowchart of a resource allocation method according to embodiments of the present application.

FIG. 23 is a schematic diagram of DCI signaling according to embodiments of the present application.

FIG. 24 is a schematic diagram of resource allocation according to embodiments of the present application.

FIG. 25 is a schematic diagram of DCI signaling according to embodiments of the present application.

FIG. 26 is a schematic diagram of DCI signaling according to embodiments of the present application.

## DETAILED DESCRIPTION

The terms "first", "second" and the like in the description, claims and drawings of the present application are used to distinguish between similar objects and are not necessarily used to describe a particular order or sequence. It is to be understood that the data used in this manner is interchangeable where appropriate so that embodiments of the present application described herein is also implemented in a sequence not illustrated or described herein. In addition, the terms "comprising", "including" or any other variations thereof described herein are intended to encompass a non-exclusive inclusion. A process, method, system, product or device that includes a series of steps or elements not only includes the expressly listed steps or elements but also include other steps or elements that are not expressly listed or are inherent to such process, method, system, product or device.

In embodiments of the present application, a video processing method is provided. FIG. 2 is a flowchart of a resource allocation method according to embodiments of the present application. As shown in FIG. 2, the resource allocation method includes steps 102 and 104 described below.

In step 102, a base station determines a resource allocation mode used by n data information groups.

In an embodiment, the resource allocation mode includes a mode one and a mode two, the mode one is that radio resources used by the n data information groups are completely overlapped and the mode two is that the radio resources used by the n data information groups are completely non-overlapped, and n is an integer greater than 1.

In step 104, the base station performs resource allocation by using the determined resource allocation mode.

In an embodiment, each of the n data information groups includes at least one of a codeword (CW), a transport block (TB), a code block (CB), a code block group (CBG) or a code block group set (CBG set).

Through the method provided in the present application, the base station determines a resource allocation mode used by multiple data information groups. Two resource allocation modes are provided. One mode is that radio resources used by the multiple data information groups are completely overlapped and the other mode is that the radio resources used by the multiple data information groups are completely non-overlapped. The base station performs resource allocation by using the determined resource allocation mode. This method solves the problem in which multiple data information groups can only be transmitted by the serving cell and the cooperative cell on the same frequency-domain resources during JT transmission, severely limiting the system performance in the related art. Through this method, multiple data information groups can be transmitted on different frequency-domain resources, thereby reducing interference between different data information groups and improving the system performance.

In an embodiment of the present application, the method further includes that the base station sends a signaling message to a terminal. The signaling message is used for indicating the resource allocation mode used by the base station and the signaling message includes at least one of radio resource control (RRC) signaling or downlink control information (DCI) signaling.

In an embodiment of the present application, when the base station performs resource allocation by using the mode two, that is, when the radio resources used by the n data information groups are completely non-overlapped, different data information groups have different scheduling groups and an offset relationship exists between different scheduling groups. The signaling message is further used for indicating at least one of (i) the start position of a first scheduling group and the length of radio resources continuously occupied by the first scheduling group, (ii) the offset relationship between different scheduling groups or (iii) the index of the offset relationship between different scheduling groups.

In an embodiment of the present application, the scheduling groups are in one-to-one correspondence with the data information groups and the scheduling groups are used for indicating radio resources actually scheduled for use by the data information groups.

In an embodiment of the present application, the (m + 1)th scheduling group has the offset relationship with one or more of the first scheduling group to the mth scheduling group, where $1 \leq m \leq n - 1$. In an embodiment, the offset relationship include the cases described below.

A first offset value exists between the start position of radio resources continuously occupied by the (m + 1)th scheduling group and the end position of radio resources continuously occupied by one or more of the first scheduling group to the mth scheduling group.

A second offset value exists between the end position of the radio resources continuously occupied by the (m + 1)th scheduling group and the start position of the radio resources continuously occupied by one or more of the first scheduling group to the mth scheduling group.

A third offset value exists between the end position of radio resources continuously occupied by the (m + 1)th scheduling group and the end position of radio resources continuously occupied by one or more of the first scheduling group to the mth scheduling group.

A fourth offset value exists between the start position of the radio resources continuously occupied by the (m + 1)th scheduling group and the start position of the radio resources continuously occupied by one or more of the first scheduling group to the mth scheduling group.

In an embodiment, the first offset value, the second offset value, the third offset value and the fourth offset value are determined according to radio resources actually used by each of the n data information groups and is indicated by the signaling message sent by the base station to the terminal. In an embodiment, the offset value is indicated or jointly indicated by some bits of resource allocation field in DCI. The joint indication here is understood as using one or more bits to indicate multiple offset values.

In an embodiment, the start position of the (m + 1)th scheduling group has an offset relationship with the start positions of multiple scheduling groups or has an offset relationship with the start position of the mth scheduling group. This is not limited in embodiments of the present application.

In an embodiment of the present application, a fifth offset value exists between the end position of the (m + 1)th scheduling group and the start position of the (m + 1)th scheduling group; or a sixth offset value exists between the start position of the (m + 1)th scheduling group and the end position of the (m + 1)th scheduling group. The fifth offset value and the sixth offset value are determined according to radio resources actually used by the data information group corresponding to the (m + 1)th scheduling group. That is, the end position of continuously occupied radio resources in radio resource allocation in the (m + 1)th scheduling group is related to the start position of radio resource allocation in the (m + 1)th scheduling group and the number of radio resources remaining after the first scheduling group to the mth scheduling group are allocated. The length of continuously occupied radio resources in radio resource allocation in the (m + 1)th scheduling group is indicated or jointly indicated by some bits of resource-allocation-related signaling in DCI. Alternatively, the start position of continuously occupied radio resources in radio resource allocation in the (m + 1)th scheduling group is related to the end position of radio resource allocation in the (m + 1)th scheduling group and the number of radio resources remaining after the first scheduling group to the mth scheduling group are allocated. The length of continuously occupied radio resources in radio resource allocation in the (m + 1)th scheduling group is indicated or jointly indicated by some bits of resource-allocation-related signaling in DCI.

In an embodiment of the present application, the signaling message is further used for indicating the positive value and the negative value of the offset relationship. The positive value and the negative value of the offset relationship is jointly coded or separately coded in the signaling message. The offset relationships between different scheduling groups is jointly coded or separately coded in the signaling message. The offset relationship between different scheduling groups and the start position of the first scheduling group and the length of the radio resources continuously occupied by the first scheduling group be jointly coded in the signaling message. The offset relationship between different scheduling groups and the start position of the first scheduling group and the length of the radio resources continuously occupied by the first scheduling group are indicated in a cascade manner by using multiple resource indicator values (RIVs) in the signaling message. The joint coding of the positive value and the negative value of the offset relationship occupies one bit, thus saving bit overheads.

In an embodiment of the present application, the base station sends the signaling message to the terminal in one of the following sending manners: one base station sends one signaling message to the terminal; multiple base stations send multiple signaling messages to the terminal; or the one base station sends multilevel signaling messages to the terminal.

In an embodiment of the present application, different resource allocation modes are in correspondence with the sending manners of the signaling message. In an embodiment, the mode one implicitly indicates that the sending manner of the signaling message is that "one base station sends one signaling message to the terminal" and the mode two implicitly indicates that the sending manner of the signaling message is that "multiple base stations send multiple signaling messages to the terminal"; or the mode one implicitly indicates that "multiple base stations send multiple signaling messages to the terminal". The manner in which different resource allocation modes are in correspondence with the sending manners of the signaling message is not limited in embodiments of the present application.

In an embodiment of the present application, the radio resources include at least frequency-domain resources. The frequency-domain resources include at least one of subbands, resource blocks or resource block groups.

In an embodiment of the present application, when the bandwidth is less than a preset value, the base station determines that the resource allocation mode is the mode one.

In an embodiment of the present application, demodulation reference signal (DMRS) ports corresponding to the n data information groups are bound to the same data information group; or the DMRS ports corresponding to the n data information groups are bound to different data information groups.

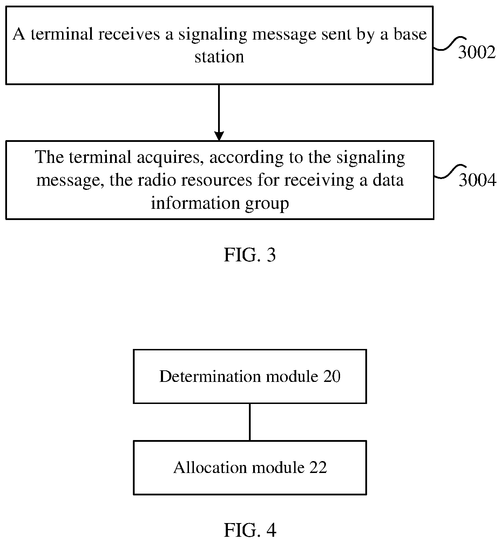

Embodiments of the present application further provide a resource allocation method. FIG. 3 is a flowchart of a resource allocation method according to embodiments of the present application. As shown in FIG. 3, the resource allocation method includes steps 3002 and 3004 described below.

In step 3002, a terminal receives a signaling message sent by a base station.

In an embodiment, the signaling message is used for indicating a resource allocation mode of n data information groups used by the base station, where the resource allocation mode includes a mode one and a mode two, the mode one is that radio resources used by the n data information groups are completely overlapping and the mode two is that the radio resources used by the n data information groups are not overlapping at all, and n is an integer greater than 1.

In step 3004, the terminal acquires, according to the signaling message, radio resources for receiving the data information groups.

Through these steps, the terminal receives the signaling message sent by the base station. The signaling message is used for indicating a resource allocation mode used by the base station. The resource allocation mode includes a mode one and a mode two. The mode one is that radio resources used by the n data information groups are completely overlapping and the mode two is that the radio resources used by the n data information groups are not overlapping at all, where n is an integer greater than 1. The terminal acquires, according to the signaling message, the radio resources for receiving the data information groups. This solves at least the problem in which multiple data information groups can only be transmitted by the serving cell and the cooperative cell on the same frequency-domain resources during JT transmission, severely limiting the system performance in the related art. Through this method, multiple data information groups can be transmitted on different frequency-domain resources, thereby reducing interference between different data information groups and improving the system performance.

In an embodiment of the present application, when the base station performs resource allocation by using the mode two, the method further includes that the terminal acquires, according to the signaling message, different scheduling groups corresponding to different data information groups.

In an embodiment of the present application, the method further includes that the terminal acquires, according to the signaling message, at least one of (i) the start position of the first scheduling group and the length of radio resources continuously occupied by the first scheduling group, (ii) an offset relationship between different scheduling groups or (iii) the index of the offset relationship between different scheduling groups.

In an embodiment, the offset relationship between different scheduling groups and the start position of the first scheduling group and the length of the radio resources continuously occupied by the first scheduling group are jointly coded in the signaling message; or the offset relationship between different scheduling groups and the start position of the first scheduling group and the length of the radio resources continuously occupied by the first scheduling group are indicated in a cascading manner by using multiple resource indicator values in the signaling message; or the offset relationships between different scheduling groups are jointly coded in the signaling message. Joint coding can save bit overheads.

Embodiments of the present application further provide a resource allocation apparatus. The apparatus is used for implementing the above-described embodiments and optional implementations. What has been described will not be repeated. As used below, the term "module" is software, hardware or a combination thereof capable of implementing preset functions. The apparatuses in the embodiments described below are implemented by software, but implementation by hardware or by a combination of software and hardware is also possible and conceived.

Embodiments of the present application further provide a resource allocation apparatus applied to a base station. The apparatus is used for implementing the above-described resource allocation. FIG. 4 is a structural block diagram of a resource allocation apparatus according to embodiments of the present application. As shown in FIG. 4, the apparatus includes a determination module 20, which is configured to determine a resource allocation mode used by n data information groups; and an allocation module 22, which is configured to perform resource allocation by using the determined resource allocation mode. The resource allocation mode includes a mode one and a mode two. The mode one is that radio resources used by the n data information groups are completely overlapped and the mode two is that the radio resources used by the n data information groups are completely non-overlapped, where n is an integer greater than 1.

Through the apparatus, a base station determines a resource allocation mode used by n data information groups. Two resource allocation modes are provided. One mode is that radio resources used by the multiple data information groups are completely overlapped and the other mode is that the radio resources used by the multiple data information groups are completely non-overlapped. The base station performs resource allocation by using the determined resource allocation mode. This method solves the problem in which multiple data information groups can only be transmitted by the serving cell and the cooperative cell on the same frequency-domain resources during JT transmission, severely limiting the system performance in the related art. Through this method, multiple data information groups can be transmitted on different frequency-domain resources, thereby reducing interference between different data information groups and improving the system performance.

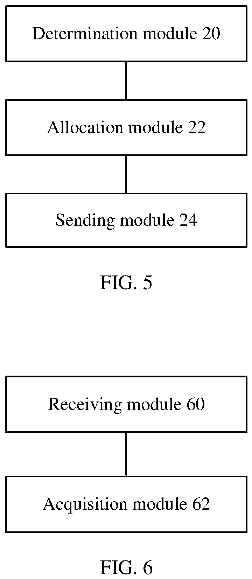

FIG. 5 is a structural block diagram of a resource allocation apparatus according to embodiments of the present application. As shown in FIG. 5, In an embodiment of the present application, the apparatus further includes a sending module 24, which is configured to send a signaling message to a terminal. The signaling message is used for indicating the resource allocation mode used by the base station and the signaling message includes at least one of radio resource control (RRC) signaling or downlink control information (DCI) signaling.

In an embodiment of the present application, when the base station performs resource allocation by using the mode two, that is, when the radio resources used by the n data information groups are completely non-overlapped, different data information groups have different scheduling groups and an offset relationship exists between different scheduling groups. The signaling message is further used for indicating at least one of (i) the start position of a first scheduling group and the length of radio resources continuously occupied by the first scheduling group, (ii) the offset relationship between different scheduling groups or (iii) the index of the offset relationship between different scheduling groups.

In an embodiment of the present application, the scheduling groups are in one-to-one correspondence with the data information groups and the scheduling groups are used for indicating radio resources actually scheduled for use by the data information groups.

In an embodiment of the present application, the offset relationship exists between the $(m + 1)$th scheduling group and one or more of the first scheduling group to the mth scheduling group, where $1 \leq m \leq n - 1$. In an embodiment, the offset relationship include the cases described below.

A first offset value exists between the start position of radio resources continuously occupied by the $(m + 1)$th scheduling group and the end position of radio resources continuously occupied by one or more of the first scheduling group to the mth scheduling group.

A second offset value exists between the end position of the radio resources continuously occupied by the $(m + 1)$th scheduling group and the start position of the radio resources continuously occupied by one or more of the first scheduling group to the mth scheduling group.

A third offset value exists between the end position of radio resources continuously occupied by the $(m + 1)$th scheduling group and the end position of radio resources continuously occupied by one or more of the first scheduling group to the mth scheduling group. A fourth offset value exists between the start position of the radio resources continuously occupied by the $(m + 1)$th scheduling group and the start position of the radio resources continuously occupied by one or more of the first scheduling group to the mth scheduling group.

In an embodiment, the first offset value, the second offset value, the third offset value and the fourth offset value are determined according to radio resources actually used by each of the n data information groups and is indicated by the signaling message sent by the base station to the terminal. In an embodiment, the offset values is indicated or jointly indicated by some bits of the resource allocation field in DCI.

In an embodiment, the start position of the $(m + 1)$th scheduling group has an offset relationship with the start positions of multiple scheduling groups or has an offset relationship with the start position of the mth scheduling group. This is not limited in embodiments of the present application.

In an embodiment of the present application, a fifth offset value exists between the end position of the $(m + 1)$th scheduling group and the start position of the $(m + 1)$th scheduling group; or a sixth offset value exists between the start position of the $(m + 1)$th scheduling group and the end position of the $(m + 1)$th scheduling group. The fifth offset value and the sixth offset value are determined according to radio resources actually used by the data information group corresponding to the $(m + 1)$th scheduling group. That is, the end position of continuously occupied radio resources in radio resource allocation in the $(m + 1)$th scheduling group is related to the start position of radio resource allocation in the $(m + 1)$th scheduling group and the number of radio resources remaining after the first scheduling group to the mth scheduling group are allocated. The length of continuously occupied radio resources in radio resource allocation in the (m + 1)th scheduling group is indicated or jointly indicated by some bits of the resource allocation field in DCI. Alternatively, the start position of continuously occupied radio resources in radio resource allocation in the (m + 1)th scheduling group is related to the end position of radio resource allocation in the (m + 1)th scheduling group and the number of radio resources remaining after the first scheduling group to the mth scheduling group are allocated. The length of continuously occupied radio resources in radio resource allocation in the (m + 1)th scheduling group is indicated or jointly indicated by some bits of the resource allocation field in DCI.

In an embodiment of the present application, the signaling message is further used for indicating the positive value and the negative value of the offset relationship. The positive value and the negative value of the offset relationship use joint coding or separate coding in the signaling message. The offset relationship between different scheduling groups use joint coding or separate coding in the signaling message. The offset relationship between different scheduling groups and the start position of the first scheduling group and the length of the radio resources continuously occupied by the first scheduling group use joint coding in the signaling message. The joint coding of the positive value and the negative value of the offset relationship occupies one bit, thus saving bit overheads.

In an embodiment of the present application, the base station sends the signaling message to the terminal in one of the following sending manners: one base station sends one signaling message to the terminal; multiple base stations send multiple signaling messages to the terminal; or one base station sends multilevel signaling messages to the terminal.

In an embodiment of the present application, different resource allocation modes are in correspondence with the sending manners of the signaling message. In an embodiment, the mode one implicitly indicates that the sending manner of the signaling message is that "one base station sends one signaling message to the terminal" and the mode two implicitly indicates that the sending manner of the signaling message is that "multiple base stations send multiple signaling messages to the terminal"; or the mode one implicitly indicates that "multiple base stations send multiple signaling messages to the terminal". The correspondence manner is not limited in embodiments of the present application.

In an embodiment of the present application, the radio resources include at least frequency-domain resources. The frequency-domain resources include at least one of subbands, resource blocks or resource block groups.

In an embodiment of the present application, when the bandwidth is less than a preset value, the base station determines that the resource allocation mode is the mode one.

In an embodiment of the present application, demodulation reference signal (DMRS) ports corresponding to the n data information groups are bound to the same data information group; or the DMRS ports corresponding to the n data information groups are bound to different data information groups.

Embodiments of the present application further provide a resource allocation apparatus applied to a terminal. The apparatus is used for implementing the above-described resource allocation. FIG. 6 is a structural block diagram of a resource allocation apparatus according to embodiments of the present application. As shown in FIG. 6, the apparatus includes a receiving module 60, which is configured to receive a signaling message sent by a base station; and an acquisition module 62, which is configured to acquire, according to the signaling message, the radio resources for receiving the data information groups. The resource allocation mode includes a mode one and a mode two. The mode one is that radio resources used by the n data information groups are completely overlapped and the mode two is that the radio resources used by the n data information groups are completely non-overlapped, where n is an integer greater than 1.

Through the above-described apparatus, a terminal receives a signaling message sent by a base station and the terminal acquires, according to the signaling message, the radio resources for receiving the data information groups. The resource allocation mode includes a mode one and a mode two. The mode one is that radio resources used by the n data information groups are completely overlapped and the mode two is that the radio resources used by the n data information groups are completely non-overlapped, where n is an integer greater than 1. This apparatus solves the problem in which multiple data information groups can only be transmitted by the serving cell and the cooperative cell on the same frequency-domain resources during JT transmission, severely limiting the system performance in the related art. Through this apparatus, multiple data information groups can be transmitted on different frequency-domain resources, thereby reducing interference between different data information groups and improving the system performance.

In an embodiment, the acquisition module 62 is further configured to acquire, according to the signaling message, different scheduling groups corresponding to different data information groups.

In an embodiment, the acquisition module 62 is further configured to acquire, according to the signaling message, at least one of (i) the start position of the first scheduling group and the length of radio resources continuously occupied by the first scheduling group, (ii) an offset relationship between different scheduling groups or (iii) the index of the offset relationship between different scheduling groups.

In an embodiment, the offset relationship between different scheduling groups and the start position of the first scheduling group and the length of the radio resources continuously occupied by the first scheduling group use joint coding in the signaling message; or the offset relationship between different scheduling groups and the start position of the first scheduling group and the length of the radio resources continuously occupied by the first scheduling group are indicated by multiple cascaded resource indicator values in the signaling message; or the offset relationship between different scheduling groups uses joint coding in the signaling message.

In an embodiment, demodulation reference signal (DMRS) ports corresponding to the n data information groups are bound to the same data information group; or the DMRS ports corresponding to the n data information groups are bound to different data information groups.

Embodiments of the present application further provide a storage medium. The storage medium includes a stored program. The program is configured such that the above-described resource allocation methods and embodiments are performed.

Embodiments of the present application further provide a resource allocation apparatus. The apparatus includes a processor and a memory, which is configured to store instructions executable by the processor. The processor is configured to perform the following operations according to the instructions stored in the memory: determining a resource allocation mode used by n data information groups and performing resource allocation by using the determined resource allocation mode. The resource allocation mode includes a mode one and a mode two. The mode one is that radio resources used by the n data information groups are completely overlapped and the mode two is that the radio resources used by the n data information groups are completely non-overlapped, where n is an integer greater than 1.

In an embodiment, the processor is further configured to send a signaling message to a terminal. The signaling message is used for indicating the resource allocation mode used by the processor and the signaling message includes at least one of radio resource control (RRC) signaling or downlink control information (DCI) signaling.

In an embodiment, when the processor performs the resource allocation by using the mode two, different data information groups have different scheduling groups and an offset relationship exists between different scheduling groups, where the signaling message is further used for indicating at least one of (i) the start position of the first scheduling group and the length of radio resources continuously occupied by the first scheduling group, (ii) the offset relationship between different scheduling groups or (iii) the index of the offset relationship between different scheduling groups.

In an embodiment, the offset relationship between different scheduling groups and the start position of the first scheduling group and the length of the radio resources continuously occupied by the first scheduling group use joint coding in the signaling message; or the offset relationship between different scheduling groups uses joint coding in the signaling message.

The processor here further perform any steps in the above-described resource allocation methods and the examples of the resource allocation methods, and serve as a carrier for each function module in the above-described resource allocation apparatuses.

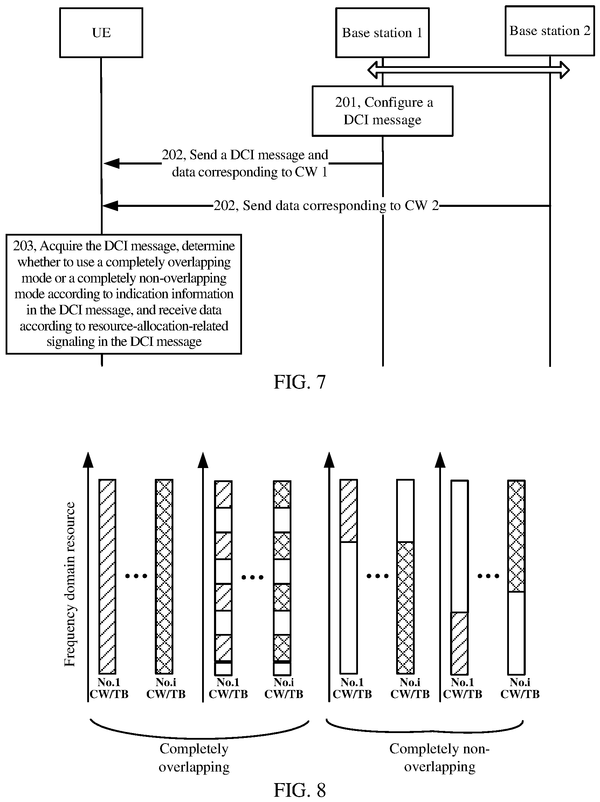

Embodiments of the present application provide a resource allocation method. As shown in FIG. 7, the method includes steps 201 to 203 described below.

In step 201, a base station 1 configures a DCI message. The base station 1 determines whether to use a completely overlapping resource allocation mode or a completely non-overlapping resource allocation mode according to measurement information fed back by a terminal in combination with the service condition/terminal capability. The base station 1 interacts with a base station 2. The base station 2 learns about radio resources occupied by the scheduling group corresponding to the codeword sent by the base station 2.

In step 202, the base station 1 sends a DCI message (equivalent to DCI signaling) and data corresponding to codeword 1 and the base station 2 sends data corresponding to codeword 2.

In step 203, the terminal acquires the DCI message, determines whether to use a completely overlapping mode or a completely non-overlapping mode according to indication information in the DCI message, and receives data according to the resource allocation field in the DCI message.

In an embodiment, the DCI message supports switching between a manner that n codewords use the same resource allocation mode and a manner that n codewords use different resource allocation modes. The same resource allocation mode means that radio resources used by the n codewords are completely overlapped. Different resource allocation modes mean that radio resources used by the n codewords are completely non-overlapped, where n is greater than 1. In an embodiment, n is equal to 2.

FIG. 8 is a schematic diagram of a completely overlapping allocation mode and a completely non-overlapping allocation mode according to embodiments of the present application. As shown in FIG. 8, embodiments of the present application provide two resource allocation modes: a completely overlapping mode and a completely non-overlapping mode.

In an embodiment, switching indication signaling indicates that the same resource allocation mode or different resource allocation modes are used between the n codewords. In an embodiment, 1-bit signaling is used, 0 indicates completely overlapping and 1 indicates completely non-overlapping.

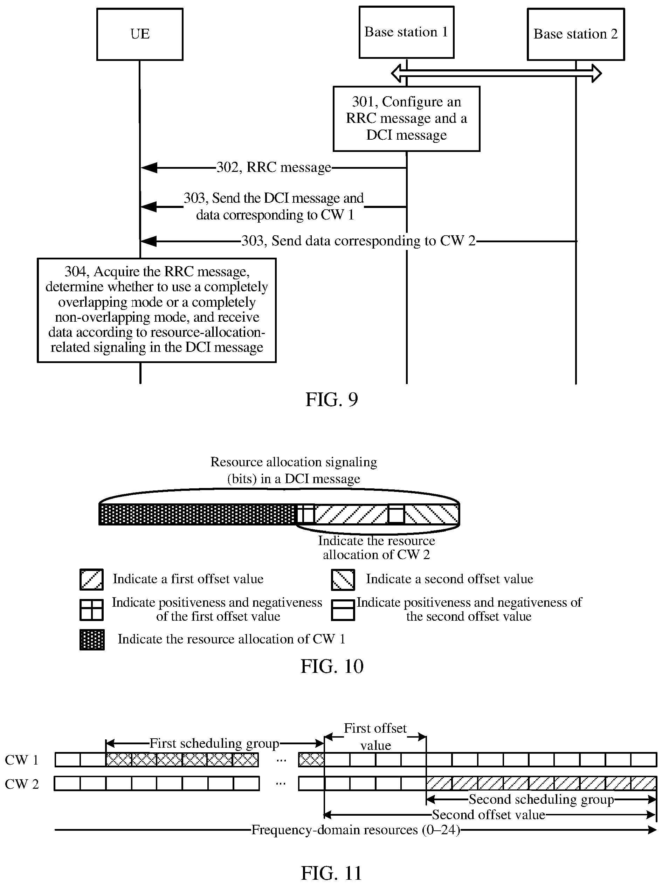

In an embodiment, switching indication information is sent through at least one of an RRC message or a DCI message. In an embodiment, as shown in FIG. 7, the switching indication information is sent through the DCI message; as shown in FIG. 9, the switching indication information is sent through the RRC message.

In an embodiment, resource-allocation-related signaling in the DCI message is used for indicating the actual resource allocation of the n codewords, where n is greater than 1.

In an embodiment, if the signaling indicates that the same resource allocation mode is used by the n codewords, that is, radio resources used by the n codewords are completely overlapped, then the resource-allocation-related signaling in the DCI message uses the LTE resource allocation method and definition. The LTE resource allocation method and definition refers to resource allocation mode 0/1/2.

In an embodiment, if the signaling indicates that different resource allocation modes are used by the n codewords, that is, radio resources used by the n codewords are not overlapped at all, the different codewords have different scheduling groups, and an offset relationship exists between different scheduling groups. The first scheduling group is indicated in the form of the start position and continuously occupied radio resources.

In an embodiment, the scheduling groups are in one-to-one correspondence with codewords and indicate radio resources actually scheduled for use on the codewords. The first scheduling group refers to the scheduling group corresponding to codeword 1.

In an embodiment, continuously occupied radio resources and the start position of the first scheduling group are indicated by $ceil(\log_2^{(R_{Num}*(R_{Num}+1)/2)})$ bits in the resource-allocation-related signaling in the DCI message. $R_{Num}$ denotes the number of radio resources and ceil denotes rounding up to an integer.

In an embodiment, the radio resources include frequency-domain resources. The frequency-domain resources include at least one of subbands, resource blocks or resource block groups.

FIG. 10 is a schematic diagram of DCI signaling according to embodiments of the present application. As shown in FIG. 10, the first $ceil(\log_2^{(R_{Num}*(R_{Num}+1)/2)})$ bits in the resource-allocation-related signaling in the DCI message are used for indicating the resource allocation of codeword 1.

In an embodiment, the offset relationship exists between the (m + 1)th scheduling group and at least one of the first scheduling group to the mth scheduling group.

In an embodiment, the case where the (m + 1)th scheduling group (a1) has the offset relationship with at least one scheduling group (a2) of the first scheduling group to the mth scheduling group refers to the case where a first offset value exists between the start position (b1) of radio resources continuously occupied by the (m + 1)th scheduling group and the end position (b2) of radio resources continuously occupied by at least one of the first scheduling group to the mth scheduling group. The first offset value is indicated or jointly indicated by part of bits in resource-allocation-related signaling in the DCI message. In another embodiment, the case where the offset relationship exists between the (m + 1)th scheduling group (a1) and at least one (a2) of the first scheduling group to the mth scheduling group refers to the case where a first offset value exists between the end position (c1) of radio resources continuously occupied by the (m + 1)th scheduling group and the start position (c2) of radio resources continuously occupied by at least one of the first scheduling group to the mth scheduling group. The first offset value is indicated or jointly indicated by part of bits in resource-allocation-related signaling in the DCI message.

In another embodiment, the case where the (m + 1)th scheduling group (a1) has the offset relationship with at least one scheduling group (a2) of the first scheduling group to the mth scheduling group refers to the case where a second offset value exists between the end position (c1) of radio resources continuously occupied by the (m + 1)th scheduling group and the end position (b2) of radio resources continuously occupied by at least one of the first scheduling group to the mth scheduling group. The second offset value is indicated or jointly indicated by part of bits of resource-allocation-related signaling in the DCI message. In another embodiment, the case where the (m + 1)th scheduling group (a1) has the offset relationship with at least one scheduling group (a2) of the first scheduling group to the mth scheduling group refers to the case where a second offset value exists between the start position (b1) of radio resources continuously occupied by the (m + 1)th scheduling group and the start position (c2) of radio resources continuously occupied by at least one of the first scheduling group to the mth scheduling group. The second offset value is indicated or jointly indicated by part of bits of resource-allocation-related signaling in the DCI message.

In an embodiment, the end position (c1) of continuously occupied radio resources of the (m + 1)th scheduling group in radio resource allocation is related to the start position (b1) of radio resource allocation in the (m + 1)th scheduling group and the number of radio resources remaining after the first scheduling group to the mth scheduling group are allocated. The length of continuously occupied radio resources in radio resource allocation in the (m + 1)th scheduling group is indicated or jointly indicated by part of bits of resource-allocation-related signaling in the DCI message. In another embodiment, the start position (b1) of continuously occupied radio resources in radio resource allocation in the (m + 1)th scheduling group is related to the end position (c1) of radio resource allocation in the (m + 1)th scheduling group and the number of radio resources remaining after the first scheduling group to the mth scheduling group are allocated. The length of continuously occupied radio resources in radio resource allocation in the (m + 1)th scheduling group is indicated or jointly indicated by part of bits of resource-allocation-related signaling in the DCI message.

FIG. 11 is a schematic diagram of resource allocation according to embodiments of the present application. As shown in FIG. 11, the offset relationship, that is, a first offset value, exists between the start position of the second scheduling group and the end position of radio resource allocation in the first scheduling group. In an embodiment, if the system bandwidth is 25 frequency-domain resources, which are numbered from 0, and codeword 1 continuously occupies the second frequency-domain resource to the 11th frequency-domain resource, then the number of remaining continuous frequency-domain resources is 13, and then the first offset value needs to be indicated by $ceil(\log_2^{(13)})$ equal to four bits at most and the first offset value is a positive value. As shown in FIG. 10, the second bit field in the resource allocation signaling in the DCI message is used for indication. In an embodiment, one bit is used for indication, and 0 indicates that the first offset value is a positive value and 1 indicates that the first offset value is a negative value. Additionally, the offset relationship, that is, a second offset value, exists between the end position of the second scheduling group and the end position of radio resource allocation in the first scheduling group. In an embodiment, if the system bandwidth is 25 frequency-domain resources, which are numbered from 0, and codeword 1 continuously occupies the second frequency-domain resource to the 11th frequency-domain resource, then the number of remaining continuous frequency-domain resources is 13, and then the second offset value needs to be indicated by $ceil(\log_2^{(13)})$ equal to four bits at most and the second offset value is a positive value. As shown in FIG. 10, the fourth bit field in the resource allocation signaling in the DCI message is used for indication. In an embodiment, one bit is used for indication, and 0 indicates that the first offset value is a positive value and 1 indicates that the first offset value is a negative value.

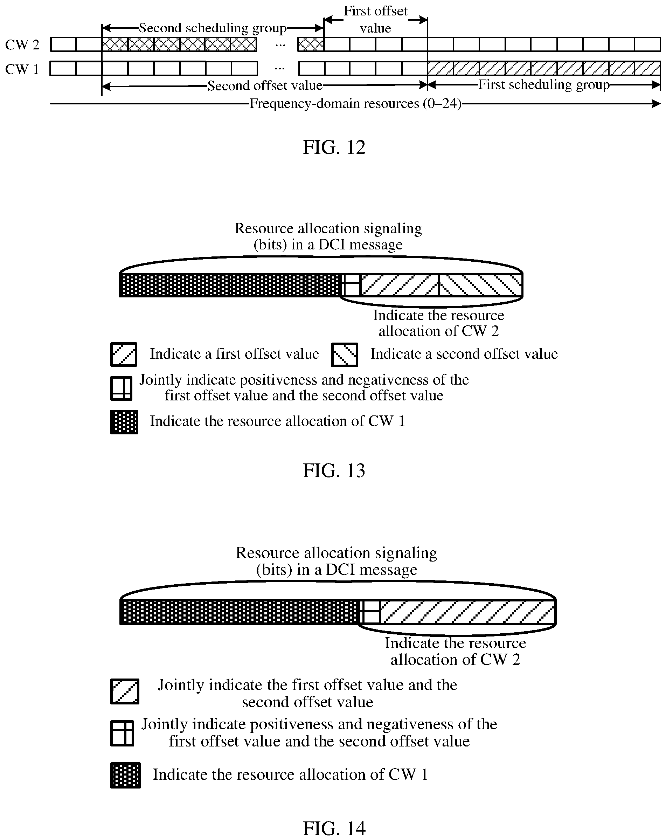

FIG. 12 is a schematic diagram of resource allocation according to embodiments of the present application. As shown in FIG. 12, the offset relationship, that is, a first offset value, exists between the end position of the second scheduling group and the start position of radio resource allocation in the first scheduling group. In an embodiment, if the system bandwidth is 25 frequency-domain resources, which are numbered from 0, and codeword 1 continuously occupies the 16th frequency-domain resource to the 24th frequency-domain resource, then the number of remaining continuous frequency-domain resources is 16, and then the first offset value needs to be indicated by $ceil(\log_2^{(16)})$ equal to four bits at most and the first offset value is a negative value. FIG. 13 is a schematic diagram of DCI signaling according to embodiments of the present application. As shown in FIG. 10, the second bit field in the resource allocation signaling in the DCI message is used for indication. In an embodiment, one bit is used for indication, and 0 indicates that the first offset value is a positive value and 1 indicates that the first offset value is a negative value. Additionally, the offset relationship, that is, a first offset value, exists between the start position of the second scheduling group and the start position of radio resource allocation in the second scheduling group. In an embodiment, if the system bandwidth is 25 frequency-domain resources, which are numbered from 0, and codeword 1 continuously occupies the 16th frequency-domain resource to the 24th frequency-domain resource, then the number of remaining continuous frequency-domain resources is 16, and then the fourth offset value needs to be indicated by $ceil(\log_2^{(16)})$ equal to four bits at most and the second offset value is a negative value. As shown in FIG. 13, the second bit field in the resource allocation signaling in the DCI message is used for indication. The second bit field are used for indicating both the first offset value and the second offset value.

As shown in FIG. 12, the offset relationship, that is, a first offset value, exists between the end position of the second scheduling group and the start position of radio resource allocation in the first scheduling group. In an embodiment, if the system bandwidth is 25 frequency-domain resources, which are numbered from 0, and codeword 1 continuously occupies the 16th frequency-domain resource to the 24th frequency-domain resource, then the number of remaining continuous frequency-domain resources is 16, and then the first offset value needs to be indicated by $ceil(\log_2^{(16)})$ equal to four bits at most and the first offset value is a negative value. As shown in FIG. 13, the second bit field in the resource allocation signaling in the DCI message is used for indication. In an embodiment, one bit is used for indication, and 0 indicates that the first offset value is a positive value and 1 indicates that the first offset value is a negative value. Additionally, the length of radio resources continuously occupied by the second scheduling group is related to the end position and maximum number of radio resources continuously occupied by the second scheduling group. In an embodiment, if the system bandwidth is 25 frequency-domain resources, which are numbered from 0, codeword 1 continuously occupies the 16th frequency-domain resource to the 24th frequency-domain resource, and it is calculated from the first offset value that the end position of the second scheduling group is the 12th frequency-domain resource, then the number of remaining continuous frequency-domain resources is 12, and then the length of radio resources continuously occupied by the second scheduling group needs to be indicated by $ceil(\log_2^{(12)})$ equal to four bits at most and the value of the length is a positive value. The end position of the first scheduling group is determined by the first offset value and the first offset positive and negative values. Thus, the length of radio resources continuously occupied by the second scheduling group determines the start position of radio resources continuously occupied by two scheduling groups.

As shown in FIG. 10, the first offset value is indicated by the third bit field in the resource allocation signaling in the DCI message and the second offset value is indicated by the fifth bit field in the resource allocation signaling in the DCI message.

As shown in FIG. 13, the first offset value is indicated by the third bit field in the resource allocation signaling in the DCI message and the second offset value is indicated by the fourth bit field in the resource allocation signaling in the DCI message.

FIG. 14 is a schematic diagram of DCI signaling according to embodiments of the present application. As shown in FIG. 14, the first offset value and the second offset value is indicated by using joint coding and is acquired by the UE through a look-up table.

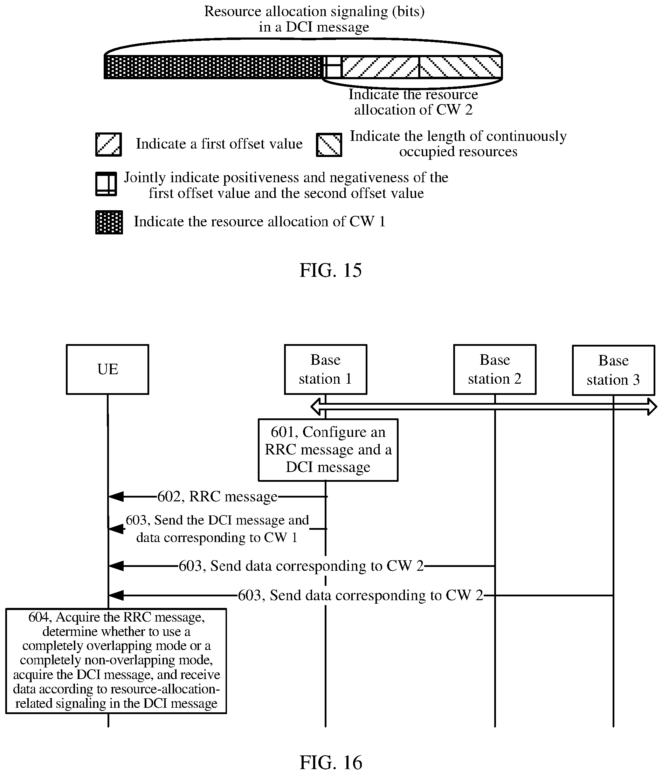

FIG. 15 is a schematic diagram of DCI signaling according to embodiments of the present application. As shown in FIG. 15, the first offset value is indicated by the third bit field in the resource allocation signaling in the DCI message and the length of continuously occupied radio resources is indicated by the fourth bit field in the resource allocation signaling in the DCI message.

In an embodiment, the UE determines, according to switching indication signaling, whether the n codewords use the same resource allocation mode or different resource allocation modes. In an embodiment, 1-bit signaling is used, 0 indicates completely overlapping and 1 indicates completely non-overlapping.

In an embodiment, if the signaling indicates that the same resource allocation mode is used between the n codewords, that is, radio resources used by the n codewords are completely overlapped, then the resource-allocation-related signaling in the DCI message uses the LTE resource allocation method and definition.

In an embodiment, the LTE resource allocation method and definition refers to resource allocation mode 0/1/2.

In an embodiment, if the signaling indicates that different resource allocation modes are used between the n codewords, that is, radio resources used by the n codewords are not overlapped at all, then the scheduling groups of different codewords are different, and an offset relationship exists between different scheduling groups. The first scheduling group is indicated by means of the start position and continuously occupied radio resources.

FIG. 16 is a flowchart of a resource allocation method according to embodiments of the present application. As shown in FIG. 16, the method includes steps 601 to 603 described below.

In step 601, a base station configures an RRC message and a DCI message.

In step 602, a base station 1 sends the DCI message and data corresponding to codeword 1 to a UE and a base station 2 sends data corresponding to codeword 2 to the UE.

In step 603, the UE acquires the DCI message, and receives data according to the resource-allocation-related signaling in the DCI message.

In an embodiment, the RRC message supports switching between a case where the n codewords use the same resource allocation mode and a case where the n codewords use different resource allocation modes. The same resource allocation mode means that radio resources used by the n data information groups are not overlapped and different resource allocation modes mean that radio resources used by the n data information groups are not non-overlapped. n is greater than 1. In an embodiment, n is equal to 3.

In an embodiment, switching indication signaling indicates that the n codewords use the same resource allocation mode or different resource allocation modes. In an embodiment, 1-bit signaling is used, 0 indicates completely overlapping and 1 indicates completely non-overlapping.

In an embodiment, the switching indication information is sent through at least one of the RRC message or the DCI message.

As shown in FIG. 16, the switching indication information is sent through the RRC message.

In an embodiment, resource-allocation-related signaling in the DCI message is used for indicating the actual resource allocation of the n codewords. n is greater than 1.

In an embodiment, if the signaling indicates that the n codewords use the same resource allocation mode, that is, radio resources used by the n codewords are completely overlapped, then the resource-allocation-related signaling in the DCI message uses the LTE resource allocation method and definition.

In an embodiment, the LTE resource allocation method and definition refers to resource allocation mode 0/1/2.

In an embodiment, if the signaling indicates that the n codewords use different resource allocation modes, that is, radio resources used by the n codewords are completely non-overlapped, then the scheduling groups of different codewords are different, and an offset relationship exists between different scheduling groups. The first scheduling group is indicated or jointly indicated by means of the start position and continuously occupied radio resources.

In an embodiment, the scheduling groups are in one-to-one correspondence with codewords and indicate radio resources actually scheduled for use by the codewords.

In an embodiment, the first scheduling group refers to the scheduling group corresponding to codeword 1.

In an embodiment, continuously occupied radio resources and the start position of the first scheduling group are indicated by $ceil(\log_2^{(R_{Num}*(R_{Num}+1)/2)})$ bits in the resource-allocation-related signaling in the DCI message. $R_{Num}$ denotes the number of radio resources.

In an embodiment, the radio resources include frequency-domain resources. The frequency-domain resources include at least one of subbands, resource blocks or resource block groups. In an embodiment, the frequency-domain resources are resource blocks (RBs).

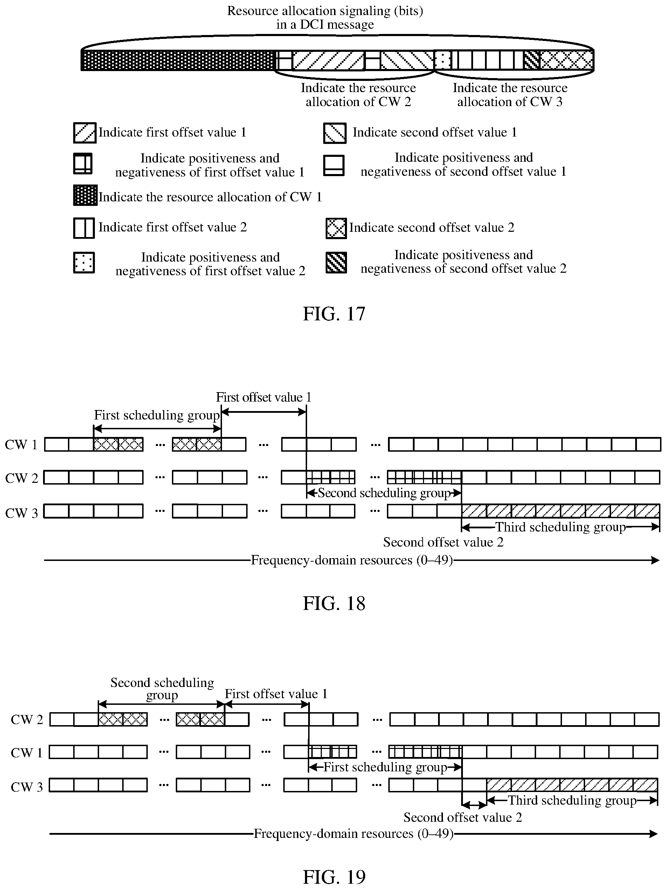

FIG. 17 is a schematic diagram of DCI signaling according to embodiments of the present application. As shown in FIG. 17, the first $ceil(\log_2^{(R_{Num}*(R_{Num}+1)/2)})$ bits in the resource-allocation-related signaling in the DCI message are used for indicating codeword-1 resource allocation.

In an embodiment, the offset relationship exists between the (m + 1)th scheduling group and at least one of the first scheduling group to the mth scheduling group.

In an embodiment, the offset relationship between the (m + 1)th scheduling group (a1) and at least one scheduling group (a2) of the first scheduling group to the mth scheduling group refers to a first offset value between the start position (b1) of radio resources continuously occupied by the (m + 1)th scheduling group and the end position (b2) of radio resources continuously occupied by at least one of the first scheduling group to the mth scheduling group. The first offset value is indicated by part of bits of resource-allocation-related signaling in the DCI message. In another embodiment, the offset relationship between the (m + 1)th scheduling group (a1) and at least one scheduling group (a2) of the first scheduling group to the mth scheduling group refers to a first offset value between the end position (c1) of radio resources continuously occupied by the (m + 1)th scheduling group and the start position (c2) of radio resources continuously occupied by at least one scheduling group of the first scheduling group to the mth scheduling group. The first offset value is indicated by part of bits of resource-allocation-related signaling in the DCI message.

In another embodiment, the offset relationship between the (m + 1)th scheduling group (a1) and at least one scheduling group (a2) of the first scheduling group to the mth scheduling group refers to a second offset value between the end position (c1) of radio resources continuously occupied by the (m + 1)th scheduling group and the end position (b2) of radio resources continuously occupied by at least one scheduling group of the first scheduling group to the mth scheduling group. The second offset value is indicated or jointly indicated by part of bits of resource-allocation-related signaling in the DCI message. In another embodiment, the offset relationship between the (m + 1)th scheduling group (a1) and at least one scheduling group (a2) of the first scheduling group to the mth scheduling group refers to a second offset value between the start position (b1) of radio resources continuously occupied by the (m + 1)th scheduling group and the start position (c2) of radio resources continuously occupied by at least one scheduling group of the first scheduling group to the mth scheduling group. The second offset value is indicated or jointly indicated by part of bits of resource-allocation-related signaling in the DCI message.

In an embodiment, the end position (c1) of continuously occupied radio resources of the radio resource allocation of the (m + 1)th scheduling group is related to the start position (b1) of radio resource allocation of the (m + 1)th scheduling group and the number of radio resources remaining after the first scheduling group to the mth scheduling group are allocated. The length of continuously occupied radio resources of radio resource allocation of the (m + 1)th scheduling group is indicated or jointly indicated by part of bits of resource-allocation-related signaling in the DCI message. In another embodiment, the start position (b1) of continuously occupied radio resources of radio resource allocation of the (m + 1)th scheduling group is related to the end position (c1) of radio resource allocation in the (m + 1)th scheduling group and the number of radio resources remaining after the first scheduling group to the mth scheduling group are allocated. The length of continuously occupied radio resources in radio resource allocation in the (m + 1)th scheduling group is indicated or jointly indicated by part of bits of resource-allocation-related signaling in the DCI message.

FIG. 18 is a schematic diagram of resource allocation according to embodiments of the present application. As shown in FIG. 18, an offset relationship, that is, a first offset value 1, exists between the start position of the second scheduling group and the end position of radio resource allocation of the first scheduling group. In an embodiment, if the system bandwidth is 50 frequency-domain resources, which are numbered from 0, and codeword 1 continuously occupies the second frequency-domain resource to the 15th frequency-domain resource, then the number of remaining continuous frequency-domain resources is 34, and then first offset value 1 needs to be indicated by $ceil(\log_2^{(34)})$ equal to six bits at most and first offset value 1 is a positive value. As shown in FIG. 17, the second bit field in the resource allocation signaling in the DCI message is used for indication. In an embodiment, one bit is used for indication, and 0 indicates that first offset value 1 is a positive value and 1 indicates that first offset value 1 is a negative value. In another embodiment, an offset relationship, that is, a first offset value 2, exists between the start position of the third scheduling group and the end position of radio resource allocation in the second scheduling group. In an embodiment, if the system bandwidth is 50 frequency-domain resources, which are numbered from 0, and codeword 2 continuously occupies the 20th frequency-domain resource to the 41th frequency-domain resource, then the number of remaining continuous frequency-domain resources is eight, and then the indication of the first offset value 2 needs $ceil(\log_2^{(8)})$ equal to four bits at most and the first offset value 2 is a positive value. As shown in FIG. 17, the sixth bit field in the resource allocation signaling in the DCI message is used for indication. In an embodiment, one bit is used for indication, and 0 indicates that first offset value 2 is a positive value and 1 indicates that first offset value 2 is a negative value.

Additionally, an offset relationship, that is, a second offset value 1, exists between the end position of the second scheduling group and the end position of radio resource allocation in the first scheduling group. In an embodiment, the system bandwidth is 50 frequency-domain resources, which are numbered from 0, and codeword 1 continuously occupies the second frequency-domain resource to the 15th frequency-domain resource, then the number of remaining continuous frequency-domain resources is 34, and then the indication of the second offset value 1 needs $ceil(\log_2^{(34)})$ equal to six bits at most and the second offset value 1 is a positive value. As shown in FIG. 17, the fourth bit field in the resource allocation signaling in the DCI message is used for indication. In an embodiment, one bit is used for indication, and 0 indicates that first offset value 1 is a positive value and 1 indicates that first offset value 1 is a negative value. In another embodiment, an offset relationship, that is, a second offset value 2, exists between the end position of the third scheduling group and the end position of radio resource allocation in the second scheduling group. In an embodiment, the system bandwidth is 50 frequency-domain resources, which are numbered from 0, and codeword 1 continuously occupies the 20th frequency-domain resource to the 41th frequency-domain resource, then the number of remaining continuous frequency-domain resources is eight, and then the indication of the second offset value 2 needs $ceil(\log_2^{(8)})$ equal to four bits at most and the second offset value 2 is a positive value. As shown in FIG. 17, the eighth bit field in the resource allocation signaling in the DCI message is used for indication. In an embodiment, one bit is used for indication, and 0 indicates that first offset value 2 is a positive value and 1 indicates that first offset value 2 is a negative value.

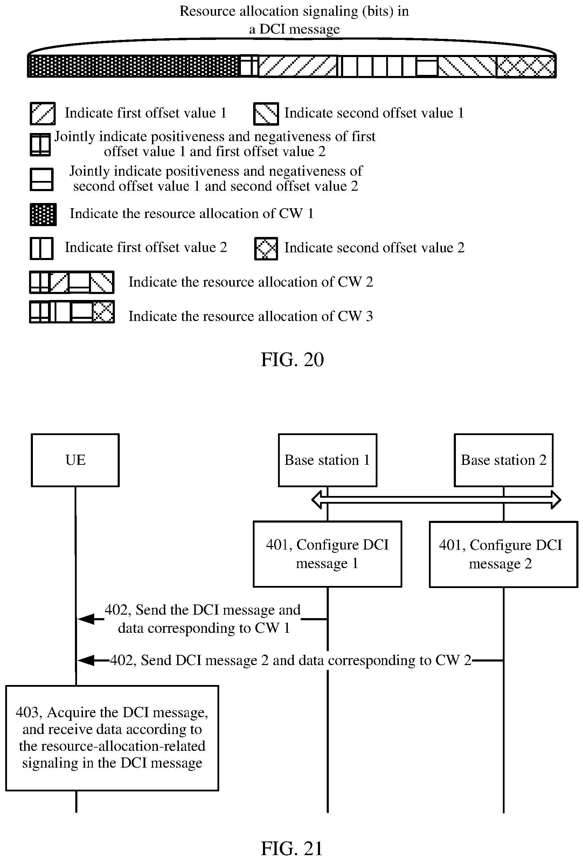

FIG. 19 is a schematic diagram of resource allocation according to embodiments of the present application. As shown in FIG. 19, an offset relationship, that is, a first offset value 1, exists between the end position of the second scheduling group and the start position of radio resource allocation of the first scheduling group. In an embodiment, the system bandwidth is 50 frequency-domain resources, which are numbered from 0, and codeword 1 continuously occupies the 20th frequency-domain resource to the 41th frequency-domain resource, then the number of remaining continuous frequency-domain resources on the left side is 20, and then the indication of the first offset value 1 needs $ceil(\log_2^{(20)})$ equal to five bits at most and first offset value 1 is a negative value. As shown in FIG. 20, the second bit field in the resource allocation signaling in the DCI message is used for indication. In an embodiment, one bit is used for indication, and 0 indicates that the first offset value 1 is a positive value and 1 indicates that first offset value 1 is a negative value. In another embodiment, an offset relationship, that is, a first offset value 2, exists between the start position of the third scheduling group and the end position of radio resource allocation of the first scheduling group. In an embodiment, the system bandwidth is 50 frequency-domain resources, which are numbered from 0, and codeword 1 continuously occupies the 20th frequency-domain resource to the 41th frequency-domain resource, then the number of remaining continuous frequency-domain resources on the right side is 8, and then the indication of the first offset value 2 needs $ceil(\log_2^{(8)})$ equal to four bits at most and the first offset value 2 is a positive value. As shown in FIG. 20, the fifth bit field in the resource allocation signaling in the DCI message is used for indication. In an embodiment, one bit is used for indication, and 0 indicates that the first offset value 2 is a positive value and 1 indicates that the first offset value 2 is a negative value.

Additionally, an offset relationship, that is, a second offset value 1, exists between the start position of the second scheduling group and the start position of radio resource allocation of the first scheduling group. In an embodiment, the system bandwidth is 50 frequency-domain resources, numbering starts from 0, and codeword 1 continuously occupies the 20th frequency-domain resource to the 41th frequency-domain resource, then the number of remaining continuous frequency-domain resources on the left side is 20, and then the indication of the first offset value 1 needs $ceil(\log_2^{(20)})$ equal to five bits at most and the second offset value 1 is a negative value. As shown in FIG. 20, the second bit field in the resource allocation signaling in the DCI message is used for indication. The second bit field are used for indicating both the first offset value 1 and the second offset value 1. In another embodiment, an offset relationship, that is, a second offset value 2, exists between the end position of the third scheduling group and the end position of radio resource allocation of the first scheduling group. In an embodiment, the system bandwidth is 50 frequency-domain resources, which are numbered from 0, and codeword 1 continuously occupies the 20th frequency-domain resource to the 41th frequency-domain resource, then the number of remaining continuous frequency-domain resources on the right side is eight, and then the indication of the second offset value 2 needs at most $ceil(\log_2^{(8)})$ equal to four bits and the second offset value 2 is a positive value. As shown in FIG. 20, the fifth bit field in the resource allocation signaling in the DCI message is used for indication. The fifth bit field is used for indicating both the first offset value 2 and the second offset value 2.

In an embodiment, the UE determines, according to switching indication signaling, whether the n codewords use the same resource allocation mode or different resource allocation modes. In an embodiment, 1-bit signaling is used, 0 indicates completely overlapping and 1 indicates completely non-overlapping.

In an embodiment, if the signaling indicates that the same resource allocation mode is used by the n codewords, that is, radio resources used by the n codewords are completely overlapped, then the resource-allocation-related signaling in the DCI message uses the LTE resource allocation method and definition.

In an embodiment, the LTE resource allocation method and definition refers to resource allocation mode 0/1/2.

In an embodiment, if the signaling indicates that different resource allocation modes are used by the n codewords, that is, radio resources used by the n codewords are completely non-overlapped, then the scheduling groups of different codewords are different, and an offset relationship exists between different scheduling groups. The first scheduling group is indicated or jointly indicated by means of the start position and the continuously occupied radio resources.

FIG. 21 is a flowchart of a resource allocation method according to embodiments of the present application. As shown in FIG. 21, the method includes steps 401 to 403 described below.

In step 401, a base station 1 configures a DCI message 1 and a base station 2 configures a DCI message 2.

In step 402, the base station 1 sends the DCI message and data corresponding to codeword 1 to a UE and the base station 2 sends DCI message 2 and data corresponding to codeword 2 to the UE.

In step 403, the UE acquires the DCI message 1 and DCI message 2, and receives data according to the resource-allocation-related signaling in DCI message 1 and DCI message 2.

In an embodiment, the DCI message 1 indicates the resource allocation method of codeword 1 and DCI message 2 indicates the resource allocation method of codeword 2.

In an embodiment, the DCI message supports switching between n codewords using the same resource allocation mode and n codewords using different resource allocation modes. Using the same resource allocation mode means that radio resources used by the n codewords are completely overlapped. Using different resource allocation modes means that radio resources used by the n codewords are completely non-overlapped, where n is greater than 1. In an embodiment, completely overlapping and completely non-overlapping are as shown in FIG. 8.

In an embodiment, switching indication signaling indicates that the n codewords use the same resource allocation mode or different resource allocation modes. In an embodiment, 1-bit signaling is used for indication, 0 indicates completely overlapping and 1 indicates completely non-overlapping.

In an embodiment, the switching indication information is sent through at least one of an RRC message or a DCI message. In an embodiment, as shown in FIG. 5, the switching indication information is sent through the DCI message. In an embodiment, as shown in FIG. 9, the switching indication information is sent through the RRC message.

In an embodiment, resource-allocation-related signaling in the DCI message is used for indicating the actual resource allocation of the n codewords. n is greater than 1.

In an embodiment, if the signaling indicates that the same resource allocation mode is used by the n codewords, that is, radio resources used by the n codewords are completely overlapped, then the resource-allocation-related signaling in the DCI message uses the LTE resource allocation method and definition.

In an embodiment, the LTE resource allocation method and definition refers to resource allocation mode 0/1/2.

In an embodiment, if the signaling indicates that different resource allocation modes are used by the n codewords, that is, radio resources used by the n codewords are not overlapped at all, the scheduling groups of different codewords are different, and an offset relationship exists between different scheduling groups. The first scheduling group is indicated or jointly indicated by means of the start position and continuously occupied radio resources.

In an embodiment, the scheduling groups are in one-to-one correspondence with codewords and indicate radio resources actually scheduled for the codewords.

In an embodiment, the first scheduling group refers to the scheduling group corresponding to codeword 1.

In an embodiment, the continuously occupied radio resources and the start position of the first scheduling group are indicated by $ceil(\log_2^{(R_{Num}*(R_{Num}+1)/2)})$ bits in the resource-allocation-related signaling in the DCI message. $R_{Num}$ denotes the number of radio **resources.**

In an embodiment, the radio resources include frequency-domain resources. The frequency-domain resources include at least one of subbands, resource blocks or resource block groups.

In an embodiment, as shown in FIG. 10, the first $ceil(\log_2^{(R_{Num}*(R_{Num}+1)/2)})$ bits in the resource-allocation-related signaling in the DCI message are used for indicating the resource allocation of codeword-1.

In an embodiment, the offset relationship exists between the (m + 1)th scheduling group and at least one of the first scheduling group to the mth scheduling group.

In an embodiment, the offset relationship between the (m + 1)th scheduling group (a1) and at least one scheduling group (a2) of the first scheduling group to the mth scheduling group refers to a first offset value between the start position (b1) of radio resources continuously occupied the radio resource allocation of the (m + 1)th scheduling group and the end position (b2) of the radio resources allocation of the at least one scheduling group of the first scheduling group to the mth scheduling group. The first offset value is indicated or jointly indicated by part of bits of resource-allocation-related signaling in the DCI message. In another embodiment, the offset relationship between the (m + 1)th scheduling group (a1) and at least one scheduling group (a2) of the first scheduling group to the mth scheduling group refers to a first offset value between the end position (c1) of radio resources continuously occupied the radio resource allocation of the (m + 1)th scheduling group and the start position (c2) of the radio resources allocation of the at least one scheduling group of the first scheduling group to the mth scheduling group. The first offset value is indicated or jointly indicated by part of bits of resource-allocation-related signaling in the DCI message.

In another embodiment, the offset relationship between the (m + 1)th scheduling group (a1) and at least one scheduling group (a2) of the first scheduling group to the mth scheduling group refers to a second offset value between the end position (c1) of radio resources continuously occupied by the radio resource allocation of the (m + 1)th scheduling group and the end position (b2) of the radio resource allocation of the at least one scheduling group of the first scheduling group to the mth scheduling group. The second offset value is indicated or jointly indicated by part of bits of resource-allocation-related signaling in the DCI message. In another embodiment, the offset relationship between the (m + 1)th scheduling group (a1) and at least one scheduling group (a2) of the first scheduling group to the mth scheduling group refers to a second offset value exists between the start position (b1) of radio resources continuously occupied by the radio resource allocation of the (m + 1)th scheduling group and the start position (c2) of the radio resource allocation of the at least one of the first scheduling group to the mth scheduling group. The second offset value is indicated or jointly indicated by part of bits of resource-allocation-related signaling in the DCI message.

In an embodiment, the end position (c1) of radio resources continuously occupied the radio resource allocation of the (m + 1)th scheduling group is related to the start position (b1) of the radio resource allocation of the (m + 1)th scheduling group and the number of radio resources remaining after the first scheduling group to the mth scheduling group are allocated. The length of the radio resources continuously occupied by the radio resource allocation in the (m + 1)th scheduling group is indicated or jointly indicated by part of bits of resource-allocation-related signaling in the DCI message. In another embodiment, the start position (b1) of the radio resources continuously occupied by the radio resource allocation of the (m + 1)th scheduling group is related to the end position (c1) of radio resource allocation of the (m + 1)th scheduling group and the number of radio resources remaining after the first scheduling group to the mth scheduling group are allocated. The length of radio resources continuously occupied by the radio resource allocation of the (m + 1)th scheduling group is indicated or jointly indicated by part of bits of resource-allocation-related signaling in the DCI message.

In an embodiment, as shown in FIG. 10, the first offset value is indicated by the third bit field in the resource allocation signaling in the DCI message and the second offset value is indicated by the fifth bit field in the resource allocation signaling in the DCI message.

In an embodiment, as shown in FIG. 13, the first offset value is indicated by the third bit field in the resource allocation signaling in the DCI message and the second offset value is indicated by the fourth bit field in the resource allocation signaling in the DCI message.

In an embodiment, as shown in FIG. 14, the first offset value and the second offset value is indicated by using joint coding and is acquired by the UE through a look-up table. Alternatively, the first offset value and the second offset value are acquired through a look-up table by using index information. In an embodiment, two bits are used for indicating the index information of the first offset value. See Table 1.

Table 1

| Index | RB Num |
| --- | --- |
| 00 | 0 |
| 01 | 2 |
| 10 | 4 |
| 11 | 6 |

In an embodiment, as shown in FIG. 15, the first offset value is indicated by the third bit field in the resource allocation signaling in the DCI message and the length of continuously occupied radio resources is indicated by the fourth bit field in the resource allocation signaling in the DCI message.

In an embodiment, the UE receives data corresponding to codeword 1 according to the DCI message 1 and receives data corresponding to codeword 2 according to the DCI message 2.

In an embodiment, the UE determines, according to switching indication signaling, whether the n codewords use the same resource allocation mode or different resource allocation modes. In an embodiment, 1-bit signaling is used for the indication, 0 indicates completely overlapping and 1 indicates completely non-overlapping.

In an embodiment, if the signaling indicates that the same resource allocation mode is used by the n codewords, that is, radio resources used by the n codewords are completely overlapped, then the resource-allocation-related signaling in the DCI message uses the LTE resource allocation method and definition.

In an embodiment, the LTE resource allocation method and definition refers to resource allocation mode 0/1/2.

In an embodiment, if the signaling indicates that different resource allocation modes are used by the n codewords, that is, radio resources used by the n codewords are completely non-overlapped, then the scheduling groups of different codewords are different, and an offset relationship exists between different scheduling groups. The first scheduling group is indicated or jointly indicated by means of the start position and continuously occupied radio resources.

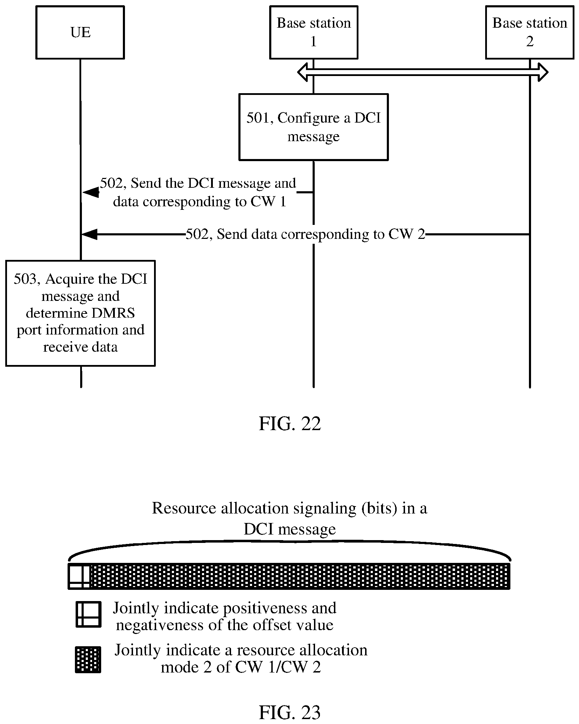

FIG. 22 is a method for indicating mapping from codeword to a transmission layer according to embodiments of the present application. As shown in FIG. 22, the method includes steps 501 to 503 described below.

In step 501, a base station configures a DCI message.

In step 502, a base station 1 sends the DCI message and data corresponding to codeword 1 and a base station 2 sends data corresponding to codeword 2.

In step 503, a terminal acquires the DCI message and determines DMRS port information and receives data.

In a Long Term Evolution or Long Term Evolution-Advanced system, the codeword-to-layer mapping under spatial multiplexingis as shown in Table 2. In an embodiment, when the number of codewords is two and the number of transmission layers is three, the first codeword is transmitted in one layer and the second codeword is transmitted in two layers according to Table 1. Moreover, DCI is used for notifying the UE of the relationship between codewords/antenna ports/scrambling IDs/the number of layers, as shown in Table 3. DMRS port information corresponding to different codewords are obtained through Table 2 and Table 3. Some new designs are provided for the completely non-overlapping mode.

Table 2

| Codeword-to-layer mapping in spatial multiplexing | | |
|---|---|---|
| Number of Layers | Number of Codewords | Codeword-to-Layer Mapping $i = 0,1,...,M_{symb}^{layer} - 1$ |
| 1 | 1 | $x^{(0)}(i) = d^{(0)}(i)$ $\quad M_{symb}^{layer} = M_{symb}^{(0)}$ |
| 2 | 1 | $x^{(0)}(i) = d^{(0)}(2i)$ $x^{(1)}(i) = d^{(0)}(2i + 1)$ $\quad M_{symb}^{layer} = M_{symb}^{(0)} / 2$ |
| 2 | 2 | $x^{(0)}(i) = d^{(0)}(i)$ $x^{(1)}(i) = d^{(1)}(i)$ $\quad M_{symb}^{layer} = M_{symb}^{(0)} = M_{symb}^{(1)}$ |
| 3 | 1 | $x^{(0)}(i) = d^{(0)}(3i)$ $x^{(1)}(i) = d^{(0)}(3i + 1)$ $x^{(2)}(i) = d^{(0)}(3i +2)$ $\quad M_{symb}^{layer} = M_{symb}^{(0)} / 3$ |
| 3 | 2 | $x^{(0)}(i) = d^{(0)}(i)$ $x^{(1)}(i) = d^{(1)}(2i)$ $x^{(2)}(i) = d^{(1)}(2i + 1)$ $\quad M_{symb}^{layer} = M_{symb}^{(0)} = M_{symb}^{(1)} / 2$ |
| 4 | 1 | $x^{(0)}(i) = d^{(0)}(4i)$ $x^{(1)}(i) = d^{(0)}(4i + 1)$ $x^{(2)}(i) = d^{(0)}(4i + 2)$ $x^{(3)}(i) = d^{(0)}(4i + 3)$ $\quad M_{symb}^{layer} = M_{symb}^{(0)} / 4$ |
| 4 | 2 | $x^{(0)}(i) = d^{(0)}(2i)$ $x^{(1)}(i) = d^{(0)}(2i + 1)$ $x^{(2)}(i) = d^{(1)}(2i)$ $x^{(3)}(i) = d^{(1)}(2i + 1)$ $\quad M_{symb}^{layer} = M_{symb}^{(0)} / 2 = M_{symb}^{(1)}$ |
| 5 | 2 | $x^{(0)}(i) = d^{(0)}(2i)$ $x^{(1)}(i) = d^{(0)}(2i + 1)$ $x^{(2)}(i) = d^{(1)}(3i)$ $x^{(3)}(i) = d^{(1)}(3i + 1)$ $x^{(4)}(i) = d^{(1)}(3i + 2)$ $\quad M_{symb}^{layer} = M_{symb}^{(0)} / 2 = M_{symb}^{(1)}$ |

(continued)

| Codeword-to-layer mapping in spatial multiplexing | | |
| --- | --- | --- |
| Number of Layers | Number of Codewords | Codeword-to-Layer Mapping $i = 0,1,...,M_{symb}^{layer}-1$ |
| 6 | 2 | $x^{(0)}(i) = d^{(0)}(3i)$ <br> $x^{(1)}(i) = d^{(0)}(3i + 1)$ <br> $x^{(2)}(i) = d^{(0)}(3i + 2)$ <br> $x^{(3)}(i) = d^{(1)}(3i)$ <br> $x^{(4)}(i) = d^{(1)}(3i + 1)$ <br> $x^{(5)}(i) = d^{(1)}(3i + 2)$     $M_{symb}^{layer} = M_{symb}^{(0)}/3 = M_{symb}^{(1)}$ |
| 7 | 2 | $x^{(0)}(i) = d^{(0)}(3i)$ <br> $x^{(1)}(i) = d^{(0)}(3i + 1)$ <br> $x^{(2)}(i) = d^{(0)}(3i + 2)$ <br> $x^{(3)}(i) = d^{(1)}(4i)$ <br> $x^{(4)}(i) = d^{(1)}(4i + 1)$ <br> $x^{(5)}(i) = d^{(1)}(4i + 2)$ <br> $x^{(6)}(i) = d^{(1)}(4i + 3)$     $M_{symb}^{layer} = M_{symb}^{(0)}/3 = M_{symb}^{(1)}$ |
| 8 | 2 | $x^{(0)}(i) = d^{(0)}(4i)$ <br> $x^{(1)}(i) = d^{(0)}(4i + 1)$ <br> $x^{(2)}(i) = d^{(0)}(4i + 2)$ <br> $x^{(3)}(i) = d^{(0)}(4i + 3)$ <br> $x^{(4)}(i) = d^{(1)}(4i)$ <br> $x^{(5)}(i) = d^{(1)}(4i + 1)$ <br> $x^{(6)}(i) = d^{(1)}(4i + 2)$ <br> $x^{(7)}(i) = d^{(1)}(4i + 3)$     $M_{symb}^{layer} = M_{symb}^{(0)}/4 = M_{symb}^{(1)}$ |

Table 3 Indication of antenna ports, scrambling IDs and the number of layers

| One Codeword: Codeword 0 Enabled Codeword 1 Disabled | | Two Codewords: Codeword 0 Enabled, Codeword 1 Enabled | |
| --- | --- | --- | --- |
| Value | Message | Value | Message |
| 0 | 1 layer, port 7, $n_{SCID}$=0 | 0 | 2 layers, ports 7-8, $n_{SCID}$=0 |
| 1 | 1 layer, port 7, $n_{SCID}$=1 | 1 | 2 layers, ports 7-8, $n_{SCID}$=1 |
| 2 | 1 layer, port 8, $n_{SCID}$=0 | 2 | 3 layers, ports 7-9 |
| 3 | 1 layer, port 8, $n_{SCID}$=1 | 3 | 4 layers, ports 7-10 |
| 4 | 2 layers, ports 7-8 | 4 | 5 layers, ports 7-11 |
| 5 | 3 layers, ports 7-9 | 5 | 6 layers, ports 7-12 |
| 6 | 4 layers, ports 7-10 | 6 | 7 layers, ports 7-13 |
| 7 | Reserved | 7 | 8 layers, ports 7-14 |

In an embodiment, the DCI message carries information indicating DMRS ports. In the case of completely non-overlapping, codeword 1 and codeword 2 use consistent DMRS ports. In an embodiment, even if Rank is equal to 4, codeword 1 uses DMRS ports 7 and 8 and codeword 2 also uses DMRS ports 7 and 8. Alternatively, codeword 1 uses DMRS ports 7 and 8 and codeword 2 uses DMRS ports 11 and 13. As shown in Table 4, DMRS port information of different codewords is indicated by added signaling.

Table 4

| One Codeword: Codeword 0 Enabled, Codeword 1 Disabled | | Two Codewords: Codeword 0 Enabled, Codeword 1 Enabled | | |
|---|---|---|---|---|
| Value | Message | Value | Flag | Message |
| 0 | 1 layer, port 7, $n_{SCID}=0$ | 0 | 00 | 2 layers, ports 7-8, $n_{SCID}=0$ |
| | | | 01 | 2 layers, ports 7-7, $n_{SCID}=0$ |
| 1 | 1 layer, port 7, $n_{SCID}=1$ | 1 | 00 | 2 layers, ports 7-8, $n_{SCID}=1$ |
| | | | 01 | 2 layers, ports 7-7, $n_{SCIDD}=1$ |
| 2 | 1 layer, port 8, $n_{SCID}=0$ | 2 | 00 | 3 layers, ports 7-9 |
| | | | 01 | 3 layers, ports 7,8,7 |
| | | | 10 | 3 layers, ports 7,8,11 |
| 3 | 1 layer, port 8, $n_{SCID}=1$ | 3 | 00 | 4 layers, ports 7-10 |
| | | | 01 | 4 layers, ports 7,8,7,8 |
| | | | 10 | 4 layers, ports 7,8,11,13 |
| 4 | 2 layers, ports 7-8 | 4 | 00 | 5 layers, ports 7-11 |
| | | | 01 | 5 layers, ports 7,8,7,8,11 |
| | | | 10 | 5 layers, ports 7,8,7,11,13 |
| | | | 11 | 5 layers, ports 7,8,8,11,13 |
| 5 | 3 layers, ports 7-9 | 5 | 00 | 6 layers, ports 7-12 |
| | | | 01 | 6 layers, 7,8,9,7,8,11 |
| | | | 10 | 6 layers, 7,8,9,7,11,13 |
| | | | 11 | 6 layers, 7,8,9,8,11,13 |
| 6 | 4 layers, ports 7-10 | 6 | 00 | 7 layers, ports 7-13 |
| | | | 01 | 8layers,ports7,8,9,7,8, 11,13 |
| 7 | Reserved | 7 | 00 | 8 layers, ports 7-14 |
| | | | 01 | 8 layers,ports7,8,9,10,7,8,11,1 3 |

This embodiment provides a resource allocation method. As shown in FIG. 7, the method includes steps 201 to 203 described below.

In step 201, a base station 1 configures a DCI message. The base station 1 determines whether to use a completely overlapping resource allocation mode or a completely non-overlapping resource allocation mode according to measurement information fed back by a terminal in combination with the service condition/terminal capability. The base station 1 interacts with a base station 2. The base station 2 learns about radio resources occupied by the scheduling group corresponding to the codeword sent by the base station 2.

In step 202, the base station 1 sends a DCI message (equivalent to DCI signaling) and data corresponding to codeword 1 and the base station 2 sends data corresponding to codeword 2.

In step 203, the terminal acquires the DCI message, determines whether to use a completely overlapping mode or a completely non-overlapping mode according to indication information in the DCI message, and receives data according to resource-allocation-related signaling in the DCI message.

In an embodiment, the DCI message supports switching between a condition n codewords use the same resource allocation mode or a condition the n codewords use different resource allocation modes. Using the same resource allocation mode means that radio resources used by the n codewords are completely overlapped. Using different resource allocation modes means that radio resources used by the n codewords are not overlapped at all. n is greater than 1. In an embodiment, n is equal to 2.

FIG. 8 is a schematic diagram of a completely overlapping allocation mode and a completely non-overlapping allocation mode according to embodiments of the present application. As shown in FIG. 8, embodiments of the present application provide two resource allocation modes: a completely overlapping mode and a completely non-overlapping mode.

In an embodiment, switching indication signaling indicates that the n codewords use the same resource allocation mode or different resource allocation modes. In an embodiment, 1-bit signaling is used for indication, 0 indicates completely overlapping and 1 indicates completely non-overlapping.

In an embodiment, the switching indication information is sent through at least one of an RRC message or a DCI message. In an embodiment, as shown in FIG. 7, the switching indication information is sent through the DCI message; as shown in FIG. 9, the switching indication information is sent through the RRC message.

In an embodiment, resource-allocation-related signaling in the DCI message is used for indicating the actual resource allocation of the n codewords. n is greater than 1.

In an embodiment, if the signaling indicates that the same resource allocation mode is used by the n codewords, that is, radio resources used by the n codewords are completely overlapped, then the resource-allocation-related signaling in the DCI message uses the LTE resource allocation method and definition. The LTE resource allocation method and definition refers to resource allocation mode 0/1/2.

In an embodiment, if the signaling indicates that different resource allocation modes are used by the n codewords, that is, radio resources used by the n codewords are not overlapped at all, then the scheduling groups of different codewords are different, and an offset relationship exists between different scheduling groups.

In an embodiment, the scheduling groups are in one-to-one correspondence with codewords and indicate radio resources actually scheduled on the codewords. The first scheduling group refers to the scheduling group corresponding to codeword 1.

In an embodiment, the radio resources include frequency-domain resources. The frequency-domain resources include at least one of subbands, resource blocks or resource block groups.

In an embodiment, the offset relationship exists between the (m + 1)th scheduling group and at least one of the first scheduling group to the mth scheduling group.

In an embodiment, the offset relationship between the (m + 1)th scheduling group (a1) and at least one scheduling group (a2) among the first scheduling group to the mth scheduling group refers to a first offset value between the start position (b1) of radio resources continuously occupied by the radio resource allocation of the (m + 1)th scheduling group and the end position (b2) of the radio resource allocation of the at least one scheduling group of the first scheduling group to the mth scheduling group. The first offset value is indicated or jointly indicated by part of bits of resource-allocation-related signaling in the DCI message. In another embodiment, the offset relationship between the (m + 1)th scheduling group (a1) and at least one scheduling group (a2) of the first scheduling group to the mth scheduling group refers to a first offset value between the end position (c1) of radio resources continuously occupied by the radio resource allocation of the (m + 1)th scheduling group and the start position (c2) of the radio resource allocation of the at least one scheduling group of the first scheduling group to the mth scheduling group. The first offset value is indicated or jointly indicated by part of bits of the resource-allocation-related signaling in the DCI message.

In an embodiment, the offset relationship between the (m + 1)th scheduling group (a1) and at least one scheduling group (a2) of the first scheduling group to the mth scheduling group refers to a second offset value between the end position (c1) of radio resources continuously occupied by the radio resource allocation of the (m + 1)th scheduling group and the end position (b2) of the radio resource allocation of the at least one scheduling group of the first scheduling group to the mth scheduling group. The second offset value is indicated or jointly indicated by part of bits of the resource-allocation-related signaling in the DCI message. Alternatively, the offset relationship between the (m + 1)th scheduling group (a1) and at least one scheduling group (a2) of the first scheduling group to the mth scheduling group refers to a second offset value between the start position (b1) of radio resources continuously occupied by the radio resource allocation of the (m + 1)th scheduling group and the start position (c2) of the radio resource allocation of the at least one scheduling group of the first scheduling group to the mth scheduling group. The second offset value is indicated or jointly indicated by part of bits of the resource-allocation-related signaling in the DCI message.

In an embodiment, the end position (c1) of continuously occupied radio resources of the radio resource allocation in the (m + 1)th scheduling group is related to the start position (b1) of the radio resource allocation in the (m + 1)th scheduling group and the number of radio resources remaining after the first scheduling group to the mth scheduling group are allocated. The length of continuously occupied radio resources of the radio resource allocation in the (m + 1)th scheduling group is indicated or jointly indicated by part of bits of the resource-allocation-related signaling in the DCI message. In another embodiment, the start position (b1) of continuously occupied radio resources of the radio resource allocation in the (m + 1)th scheduling group is related to the end position (c1) of the radio resource allocation in the (m + 1)th scheduling group and the number of radio resources remaining after the first scheduling group to the mth scheduling group are allocated. The length of continuously occupied radio resources of the radio resource allocation in the (m + 1)th scheduling group is indicated or jointly indicated by part of bits of the resource-allocation-related signaling in the DCI message.

In an embodiment, a section of continuously occupied radio resources and the start position of the first scheduling group, and the offset value are jointly indicated by $ceil(\log_2{}^{(\frac{m^2(m+1)^2}{12}+\frac{m(m+1)(2m+1)}{6}+\frac{m(m+1)}{3})})$ bits in the resource-allocation-related signaling in the DCI message, where $m = R_{Num}$ -1 and $R_{Num}$ denotes the number of radio resources. Ceil denotes rounding up to an integer.

FIG. 23 is a schematic diagram of DCI signaling according to embodiments of the present application. As shown in FIG. 23, a section of continuously occupied radio resources and the start position of the first scheduling group, and the offset value are jointly indicated by the second bit field in the resource-allocation-related signaling in the DCI message.

As shown in FIG. 23, the positiveness or negativeness of the offset value is indicated by the first bit field in the resource-allocation-related signaling in the DCI message. In an embodiment, a 1-bit indication is used for the indication, 0 indicates a positive value, that is, the resources of CW 2 are on the right side of the resources of CW 1; and 1 indicates a negative value, that is, the resources of CW 2 are on the left side of the resources of CW 1.

In an embodiment, the relationship between a section of continuously occupied radio resources, the start position of the first scheduling group, the offset value, and $ceil(\log_2{}^{(\frac{m^2(m+1)^2}{12}+\frac{m(m+1)(2m+1)}{6}+\frac{m(m+1)}{3})})$ bits are defined by means of a predefined table. The predefined table needs to be notified to a terminal through an RRC message.

In an embodiment, the UE determines, according to the switching indication signaling, whether the n codewords use the same resource allocation mode or different resource allocation modes. In an embodiment, 1-bit signaling is used for indication, 0 indicates completely overlapping and 1 indicates completely non-overlapping.

In an embodiment, if the signaling indicates that the n codewords use the same resource allocation mode, that is, radio resources used by the n codewords are completely overlapped, then the resource-allocation-related signaling in the DCI message uses the LTE resource allocation method and definition.

In an embodiment, the LTE resource allocation method and definition refers to resource allocation mode 0/1/2.

In an embodiment, if the signaling indicates that the n codewords use different resource allocation modes, that is, radio resources used by the n codewords are completely non-overlapped, the scheduling groups of different codewords are different, and an offset relationship exists between different scheduling groups. The first scheduling group is indicated by means of the start position and a section of continuously occupied radio resources.

This embodiment provides a resource allocation method. As shown in FIG. 7, the method includes steps 201 to 203 described below.

In step 201, a base station 1 configures a DCI message, and determines whether to use a completely overlapping resource allocation mode or a completely non-overlapping resource allocation mode according to measurement information fed back by a terminal in combination with the service condition/terminal capability. The base station 1 interacts with base station 2. The base station 2 learns about radio resources occupied by the scheduling group corresponding to the codeword sent by base station 2.

In step 202, the base station 1 sends a DCI message (equivalent to DCI signaling) and data corresponding to codeword 1 and the base station 2 sends data corresponding to codeword 2.

In step 203, the terminal acquires the DCI message, determines whether to use a completely overlapping mode or a completely non-overlapping mode according to indication information in the DCI message, and receives data according to the resource-allocation-related signaling in the DCI message.

In an embodiment, the DCI message supports switching between a condition that n codewords use the same resource allocation mode and a condition that n codewords use different resource allocation modes. The n codewords using the same resource allocation mode means that radio resources used by the n codewords are completely overlapped. The n codewords using different resource allocation modes mean that radio resources used by the n codewords are completely non-overlapped. n is greater than 1. In an embodiment, n is equal to 2.

FIG. 8 is a schematic diagram of the completely overlapping allocation mode and the completely non-overlapping allocation mode according to embodiments of the present application. As shown in FIG. 8, embodiments of the present application provide two resource allocation modes: a completely overlapping mode and a completely non-overlapping mode.

In an embodiment, the switching indication signaling indicates that the n codewords use the same resource allocation mode or different resource allocation modes. In an embodiment, 1-bit signaling is used for indication, 0 indicates completely overlapping and 1 indicates completely non-overlapping.

In an embodiment, the switching indication information is sent through at least one of an RRC message or a DCI message. In an embodiment, as shown in FIG. 7, the switching indication information is sent through the DCI message; as shown in FIG. 9, the switching indication information is sent through the RRC message.

In an embodiment, the resource-allocation-related signaling in the DCI message is used for indicating the actual resource allocation of the n codewords. n is greater than 1.

In an embodiment, if the signaling indicates that the n codewords use the same resource allocation mode, that is, radio resources used by the n codewords are completely overlapped, then the resource-allocation-related signaling in the DCI message uses the LTE resource allocation method and definition. The LTE resource allocation method and definition refers to resource allocation mode 0/1/2.

In an embodiment, if the signaling indicates that the n codewords use different resource allocation modes, that is, radio resources used by the n codewords are completely non-overlapped, then the scheduling groups of different codewords are different, and an offset relationship exists between different scheduling groups.

In an embodiment, the scheduling groups are in one-to-one correspondence with codewords and indicate radio resources actually scheduled for use on the codewords. The first scheduling group refers to the scheduling group corresponding to codeword 1.

In an embodiment, the radio resources include frequency-domain resources. The frequency-domain resources include at least one of subbands, resource blocks or resource block groups.

In an embodiment, the (m + 1)th scheduling group has the offset relationship with at least one of the first scheduling group to the mth scheduling group.

In an embodiment, the offset relationship between the (m + 1)th scheduling group (a1) and at least one (a2) of the first scheduling group to the mth scheduling group refers to a first offset value between the start position (b1) of continuously occupied radio resources of the radio resource allocation of the (m + 1)th scheduling group and the end position (b2) of the radio resource allocation of the at least one of the first scheduling group to the mth scheduling group. The first offset value is indicated or jointly indicated by some bits of the resource-allocation-related signaling in the DCI message. In another embodiment, the offset relationship between the (m + 1)th scheduling group (a1) and at least one (a2) of the first scheduling group to the mth scheduling group refers to a first offset value between the end position (c1) of continuously occupied radio resources of the radio resource allocation of the (m + 1)th scheduling group and the start position (c2) of the radio resource allocation of the at least one of the first scheduling group to the mth scheduling group. The first offset value is indicated or jointly indicated by some bits of the resource-allocation-related signaling in the DCI message.

In an embodiment, the offset relationship between the (m + 1)th scheduling group (a1) and at least one (a2) of the first scheduling group to the mth scheduling group refers to a second offset value between the end position (c1) of continuously occupied radio resources of the radio resource allocation of the (m + 1)th scheduling group and the end position (b2) of the radio resource allocation of the at least one of the first scheduling group to the mth scheduling group. The second offset value is indicated or jointly indicated by some bits of the resource-allocation-related signaling in the DCI message. In another embodiment, the offset relationship between the (m + 1)th scheduling group (a1) and at least one (a2) of the first scheduling group to the mth scheduling group refers to a second offset value between the start position (b1) of continuously occupied radio resources of the radio resource allocation of the (m + 1)th scheduling group and the start position (c2) of the radio resource allocation of the at least one of the first scheduling group to the mth scheduling group. The second offset value is indicated or jointly indicated by some bits of the resource-allocation-related signaling in the DCI message.

In an embodiment, the end position (c1) of the continuously occupied radio resources in the radio resource allocation in the (m + 1)th scheduling group is associated with the start position (b1) of the radio resource allocation in the (m + 1)th scheduling group and the number of radio resources remaining after the first scheduling group to the mth scheduling group are allocated. The length of the continuously occupied radio resources in the radio resource allocation in the (m + 1)th scheduling group is indicated or jointly indicated by some bits of the resource-allocation-related signaling in the DCI message. In another embodiment, the start position (b1) of the continuously occupied radio resources in the radio resource allocation in the (m + 1)th scheduling group is associated with the end position (c1) of the radio resource allocation in the (m + 1)th scheduling group and the number of radio resources remaining after the first scheduling group to the mth scheduling group are allocated. The length of the continuously occupied radio resources in the radio resource allocation in the (m + 1)th scheduling group is indicated or jointly indicated by some bits of the resource-allocation-related signaling in the DCI message.

In an embodiment, a section of continuously occupied radio resources and the start position of the first scheduling group, and the offset value are indicated by in a cascading manner by using two levels of resource indicator values, which are indicated through $ceil(\log_2^{((R_{Num}-2)(R_{Num}+1)/2)}) + ceil(\log_2^{(R_{Num}(R_{Num}+1)/2)}) + 1$ bits in the resource-allocation-related signaling in the DCI message. $R_{Num}$ denotes the number of radio resources. Ceil denotes rounding up to an integer.

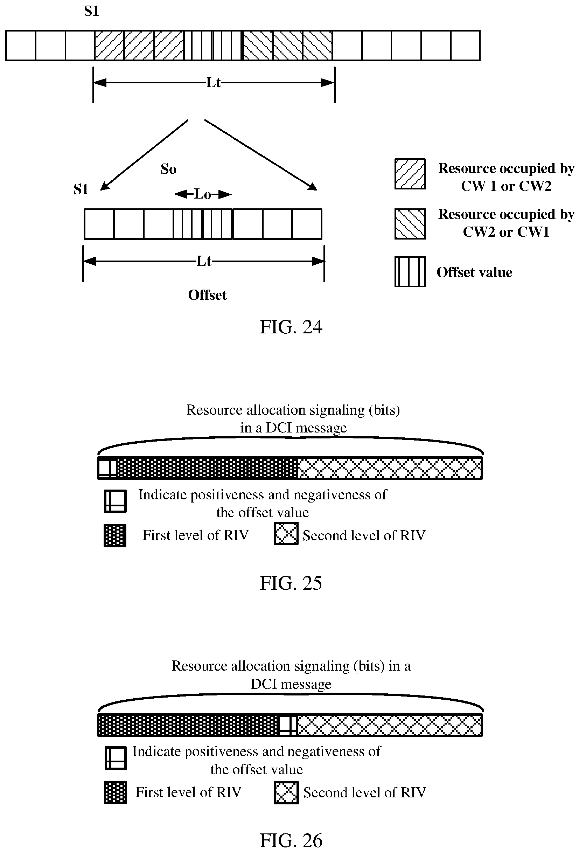

FIG. 25 is a schematic diagram of DCI signaling according to embodiments of the present application. As shown in FIG. 25, the first level of resource indicator value is jointly indicated by the second bit field in the resource allocation signaling in the DCI message and the second level of resource indicator value is jointly indicated by the third bit field in the resource allocation signaling in the DCI message. FIG. 24 is a schematic diagram of resource allocation according to embodiments of the present application. As shown in FIG. 24, the first level of resource indicator value uses $ceil(\log_2^{(R_{Num}(R_{Num}+1)/2)})$ bits to jointly indicate S1 and Lt, where S1 denotes the start position of CW 1 or CW 2, and Lt denotes the total length of CW 1, CW 2 and the offset between CW 1 and CW 2; the second level of resource indicator value uses $ceil(\log_2^{((R_{Num}-2)(R_{Num}+1)/2)})$ bits to indicate the general start position So and length Lo of the offset.

As shown in FIG. 25, the positiveness or negativeness of the offset value is indicated by the first bit field in the resource-allocation-related signaling in the DCI message. In an embodiment, one bit is used for indication, 0 indicates a positive value, that is, the resources of CW 2 are on the right side of the resources of CW 1; and 1 indicates a negative value, that is, the resources of CW 2 are on the left side of the resources of CW 1.

FIG. 26 is a schematic diagram of DCI signaling according to embodiments of the present application. As shown in FIG. 26, the first level of resource indicator value is jointly indicated by the first bit field in the resource allocation signaling in the DCI message and the second level of resource indicator value is jointly indicated by the third bit field in the resource allocation signaling in the DCI message. As shown in FIG. 24, the first level of resource indicator value uses $ceil(\log_2^{(R_{Num}(R_{Num}+1)/2)})$ bits to jointly indicate S1 and Lt, where S1 denotes the start position of CW 1 or CW 2, and Lt denotes the total length of CW 1, CW 2 and the offset between CW 1 and CW 2; the second level of resource indicator value uses $ceil(\log_2^{((R_{Num}-2)(R_{Num}+1)/2)})$ bits to indicate the general start position So and length Lo of the offset.

As shown in FIG. 26, the positiveness or negativeness of the offset value are indicated by the second bit field in the resource-allocation-related signaling in the DCI message. In an embodiment, one bit is used for indication, 0 indicates a positive value, that is, the resources of CW 2 are on the right side of the resources of CW 1; and 1 indicates a negative value, that is, the resources of CW 2 are on the left side of the resources of CW 1.

In an embodiment, the UE determines, according to the switching indication signaling, whether the n codewords use the same resource allocation mode or different resource allocation modes. In an embodiment, the switching indication signaling is 1-bit signaling, 0 indicates completely overlapping and 1 indicates completely non-overlapping.

In an embodiment, if the signaling indicates that the n codewords use the same resource allocation mode, that is, radio resources used by the n codewords are completely overlapped, then the resource-allocation-related signaling in the DCI message uses the LTE resource allocation method and definition.

In an embodiment, the LTE resource allocation method and definition refers to resource allocation mode 0/1/2.

In an embodiment, if the signaling indicates that the n codewords use different resource allocation modes, that is, radio resources used by the n codewords are completely non-overlapped, then the scheduling groups of different codewords are different, and an offset relationship exists between different scheduling groups. The first scheduling group is indicated in the form of the start position and a section of continuously occupied radio resources.

Embodiments of the present application further provide a storage medium. In embodiments of the present application, the storage medium is configured to store program codes for performing the resource allocation method provided in the above-described embodiments.

In embodiments of the present application, the storage medium is located in any computer terminal in a computer terminal group in a computer network or in any mobile terminal in a mobile terminal group.

In embodiments of the present application, the storage medium is configured to store program codes S1 and S2 configured to perform the steps described below.

In S1, a resource allocation mode used by n data information groups is determined. The resource allocation mode includes a mode one and a mode two. The mode one is that radio resources used by the n data information groups are completely overlapped and the mode two is that the radio resources used by the n data information groups are completely non-overlapped. n is an integer greater than 1.

In S2, resource allocation is performed by using the determined resource allocation mode.

The serial numbers of the above-described embodiments of the present application are merely for the purpose of description and do not represent the superiority and inferiority of the embodiments.

In the above-described embodiments of the present application, the description of each embodiment has its own emphasis. For a part not described in detail in one embodiment, reference is made to related description of other embodiments.

It is to be understood that the content disclosed in embodiments provided in the present application is be implemented in other manners. The above-described apparatus embodiments are merely illustrative. In an embodiment, the unit classification is merely a logical function classification and, in practice, the unit classification is implemented in other manners. In an embodiment, multiple units or components are combined or are integrated into another system, or some features are omitted or not executed. Additionally, the presented or discussed mutual coupling, direct coupling or communicative connection is indirect coupling or communicative connection via interfaces, units or modules, or is electrical or in other forms.

The units described above as separate components are or are not physically separated. Components presented as units are or are not physical units, that is, are located in one place or are distributed over multiple network elements. Part or all of these units are selected according to actual requirements to achieve objects of solutions of embodiments of the present application.

Additionally, various function units in embodiments of the present application are integrated into one processing unit, or each function unit is physically present separately, or two or more units are integrated into one unit. The integrated function unit is implemented by hardware or a software function unit.

The integrated unit is stored in a computer-readable storage medium if implemented in the form of a software function unit and sold or used as an independent product. Based on this understanding, solutions provided in the present application substantially, or the part contributing to the related art, is embodied in the form of a software product. The software product is stored in a storage medium and includes several instructions for enabling a computer device (which is a personal computer, a server or a network device) to execute all or part of steps in the methods provided by embodiments of the present application. The storage medium is a U disk, a read-only memory (ROM), a random access memory (RAM), a mobile hard disk, a magnetic disk, an optical disk or another medium capable of storing program codes.

## INDUSTRIAL APPLICABILITY

The resource allocation method provided in the present disclosure solves at least the problem in which multiple data information groups can only be transmitted by the serving cell and the cooperative cell on the same frequency-domain resources during JT transmission, severely limiting the system performance in the related art. Through this method, multiple data information groups can be transmitted on different frequency-domain resources, thereby reducing interference between different data information groups and improving the system performance.

## Claims

1.  A resource allocation method, comprising:

    determining (102), by a base station, a resource allocation mode used by n data information groups, wherein the resource allocation mode comprises a mode one and a mode two, the mode one is that radio resources used by the n data information groups are completely overlapped and the mode two is that the radio resources used by the n data information groups are completely non-overlapped, and n is an integer greater than 1;
    performing (104), by the base station, resource allocation by using the determined resource allocation mode; and
    sending, by the base station, a signaling message to a terminal, wherein the signaling message is used for indicating the resource allocation mode used by the base station and the signaling message comprises at least one of radio resource control, RRC, signaling or downlink control information, DCI, signaling,
    **characterized in that** when the base station performs the resource allocation by using the mode two, different data information groups have different scheduling groups and an offset relationship exists between different scheduling groups, the signaling message is further used for indicating at least one of: a start position of a first scheduling group and a length of radio resources continuously occupied by the first scheduling group, the offset relationship between different scheduling groups, or an index of the offset relationship between different scheduling groups.

2.  The method of claim 1, wherein
    the different scheduling groups are in one-to-one correspondence with the data information groups and the different scheduling groups are used for indicating radio resources actually scheduled for use by the data information groups.

3.  The method of claim 1, wherein the offset relationship exists between an (m+1)th scheduling group and at least one of the first scheduling group to an mth scheduling group, wherein $1 \leq m \leq n - 1$.

4.  The method of claim 3, wherein

    a first offset value exists between a start position of radio resources continuously occupied by the (m+1)th scheduling group and an end position of radio resources continuously occupied by the at least one of the first scheduling group to the mth scheduling group; or
    a second offset value exists between an end position of the radio resources continuously occupied by the (m+1)th scheduling group and a start position of the radio resources continuously occupied by the at least one of the first scheduling group to the mth scheduling group; or
    a third offset value exists between an end position of radio resources continuously occupied by the (m+1)th scheduling group and an end position of radio resources continuously occupied by the at least one of the first scheduling group to the mth scheduling group; or
    a fourth offset value exists between a start position of the radio resources continuously occupied by the (m+1)th scheduling group and a start position of the radio resources continuously occupied by the at least one of the first scheduling group to the mth scheduling group; or

a fifth offset value exists between an end position of the (m+1)th scheduling group and a start position of the (m+1)th scheduling group; or

a sixth offset value exists between the start position of the (m+1)th scheduling group and the end position of the (m+1)th scheduling group,

wherein the first offset value, the second offset value, the third offset value and the fourth offset value are determined according to radio resources actually used by each of the n data information groups, the fifth offset value and the sixth offset value are determined according to radio resources actually used by a data information group corresponding to the (m+1)th scheduling group.

5. The method of any one of claims 2 to 4, wherein the offset relationship between different scheduling groups and the start position of the first scheduling group and the length of the radio resources continuously occupied by the first scheduling group use joint coding in the signaling message; or the offset relationship between different scheduling groups and the start position of the first scheduling group and the length of the radio resources continuously occupied by the first scheduling group are indicated in a cascading manner by using multiple resource indicator values in the signaling message; or the offset relationship between different scheduling groups uses joint coding in the signaling message.

6. The method of any one of claims 1 to 5, wherein the base station sends the signaling message to the terminal in one of the following sending manners:

   one base station sends one signaling message to the terminal; multiple base stations send multiple signaling messages to the terminal; or one base station sends multilevel signaling messages to the terminal,

   preferably, different resource allocation modes are in correspondence with the sending manners of the signaling message.

7. The method of any one of claims 1 to 6, wherein the radio resources comprise frequency-domain resources, wherein the frequency-domain resources comprise at least one of subbands, resource blocks or resource block groups.

8. The method of any one of claims 1 to 7, wherein

   demodulation reference signal, DMRS, ports corresponding to the n data information groups are bound to a same data information group; or

   the DMRS ports corresponding to the n data information groups are bound to different data information groups.

9. A resource allocation method, comprising:

   receiving (3002), by a terminal, a signaling message sent by a base station, wherein the signaling message is used for indicating a resource allocation mode of n data information groups used by the base station, and the signaling message comprises at least one of radio resource control, RRC, signaling or downlink control information, DCI, signaling, and wherein the resource allocation mode comprises a mode one and a mode two, the mode one is that radio resources used by the n data information groups are completely overlapped and the mode two is that the radio resources used by the n data information groups are completely non-overlapped, and n is an integer greater than 1; and

   acquiring (3004), by the terminal according to the signaling message, radio resources for receiving the n data information groups,

   **characterized in that** when the signaling message indicates that the base station performs resource allocation by using the mode two, the method further comprises:

   acquiring, by the terminal according to the signaling message, different scheduling groups corresponding to different data information groups and an offset relationship exists between different scheduling groups; and

   acquiring, by the terminal according to the signaling message, at least one of a start position of a first scheduling group and a length of radio resources continuously occupied by the first scheduling group, an offset relationship between the different scheduling groups or an index of the offset relationship between the different scheduling groups.

10. The method of claim 9, wherein the offset relationship between different scheduling groups, the start position of the

# EP 3 637 906 B1

first scheduling group and the length of the radio resources continuously occupied by the first scheduling group use joint coding in the signaling message; or the offset relationship between different scheduling groups, the start position of the first scheduling group and the length of the radio resources continuously occupied by the first scheduling group are indicated in a cascading manner by using multiple resource indicator values in the signaling message; or the offset relationship between different scheduling groups uses joint coding in the signaling message.

11. A computer-readable storage medium, comprising a stored program, wherein the program includes instructions which, when the program is executed by a computer, cause the computer to perform the method of any one of claims 1 to 10.

12. A resource allocation apparatus, comprising:

    a processor; and
    a memory, which is configured to store instructions executable by the processor,
    wherein the processor is configured to execute the instructions stored in the memory to perform the method of any one of claims 1 to 10.

**Patentansprüche**

1. Ein Verfahren zur Ressourcenzuweisung, das Folgendes umfasst:

    Bestimmen (102) durch eine Basisstation eines Ressourcenzuweisungsmodus, der von n Dateninformationsgruppen verwendet wird, wobei der Ressourcenzuweisungsmodus einen Modus eins und einen Modus zwei umfasst, wobei der Modus eins darin besteht, dass die von den n Dateninformationsgruppen verwendeten Funkressourcen vollständig überlappt sind, und der Modus zwei darin besteht, dass die von den n Dateninformationsgruppen verwendeten Funkressourcen vollständig nicht überlappt sind, und n eine ganze Zahl größer als 1 ist;
    Durchführen (104) einer Ressourcenzuweisung durch die Basisstation unter Verwendung des bestimmten Ressourcenzuweisungsmodus; und
    Senden einer Signalisierungsnachricht durch die Basisstation an ein Endgerät, wobei die Signalisierungsnachricht dazu verwendet wird, den von der Basisstation verwendeten Ressourcenzuweisungsmodus anzuzeigen, und die Signalisierungsnachricht mindestens eines der folgenden Elemente umfasst: RRC-Signalisierung (Radio Resource Control) oder DCI-Signalisierung (Downlink Control Information),
    **dadurch gekennzeichnet, dass**, wenn die Basisstation die Ressourcenzuweisung unter Verwendung von Modus zwei durchführt, verschiedene Dateninformationsgruppen verschiedene Planungsgruppen haben und eine Offset-Beziehung zwischen verschiedenen Planungsgruppen besteht, die Signalisierungsnachricht ferner verwendet wird, um mindestens eines von Folgendem anzuzeigen: eine Startposition einer ersten Planungsgruppe und eine Länge von Funkressourcen, die kontinuierlich von der ersten Planungsgruppe belegt werden, die Offset-Beziehung zwischen verschiedenen Planungsgruppen oder einen Index der Offset-Beziehung zwischen verschiedenen Planungsgruppen.

2. Das Verfahren nach Anspruch 1, wobei
    Die verschiedenen Planungsgruppen stehen in Eins-zu-eins-Entsprechung mit den Dateninformationsgruppen, und die verschiedenen Planungsgruppen werden zur Angabe der tatsächlich für die Nutzung durch die Dateninformationsgruppen vorgesehenen Funkressourcen verwendet.

3. Verfahren nach Anspruch 1, wobei die Offset-Beziehung zwischen einer (m + 1)-ten Dispositionsgruppe und mindestens einer der ersten Dispositionsgruppen zu einer m-ten Dispositionsgruppe besteht, wobei $1 \leq m \leq n - 1$.

4. Das Verfahren nach Anspruch 3, wobei

    ein erster Versatzwert zwischen einer Anfangsposition der von der (m + 1)-ten Planungsgruppe ständig belegten Funkressourcen und einer Endposition der von mindestens einer der ersten Planungsgruppe bis zur m-ten Planungsgruppe ständig belegten Funkressourcen existiert; oder
    ein zweiter Versatzwert zwischen einer Endposition der von der (m + 1)-ten Planungsgruppe ständig belegten Funkressourcen und einer Startposition der von mindestens einer der ersten Planungsgruppe bis zur m-ten Planungsgruppe ständig belegten Funkressourcen existiert; oder

ein dritter Versatzwert zwischen einer Endposition von Funkressourcen, die ständig von der (m + 1)-ten Planungsgruppe belegt sind, und einer Endposition von Funkressourcen, die ständig von mindestens einer der ersten Planungsgruppe bis zur m-ten Planungsgruppe belegt sind, existiert; oder

ein vierter Versatzwert zwischen einer Startposition der von der (m + 1)-ten Planungsgruppe ständig belegten Funkressourcen und einer Startposition der von mindestens einer der ersten Planungsgruppe bis zur m-ten Planungsgruppe ständig belegten Funkressourcen existiert; oder

ein fünfter Versatzwert zwischen einer Endposition der (m + 1)-ten Termingruppe und einer Startposition der (m + 1)-ten Termingruppe existiert; oder

ein sechster Versatzwert zwischen der Anfangsposition der (m + 1)-ten Termingruppe und der Endposition der (m + 1)-ten Termingruppe besteht,

wobei der erste Offset-Wert, der zweite Offset-Wert, der dritte Offset-Wert und der vierte Offset-Wert gemäß den tatsächlich von jeder der n Dateninformationsgruppen verwendeten Funkressourcen bestimmt werden; der fünfte Offset-Wert und der sechste Offset-Wert gemäß den tatsächlich von einer Dateninformationsgruppe verwendeten Funkressourcen bestimmt werden, die der (m + 1)-ten Planungsgruppe entspricht.

5. Verfahren nach einem der Ansprüche 2 bis 4, wobei die Offset-Beziehung zwischen verschiedenen Planungsgruppen und die Startposition der ersten Planungsgruppe und die Länge der von der ersten Planungsgruppe kontinuierlich belegten Funkressourcen eine gemeinsame Kodierung in der Signalisierungsnachricht verwenden; oder die Offset-Beziehung zwischen verschiedenen Planungsgruppen und der Startposition der ersten Planungsgruppe und die Länge der von der ersten Planungsgruppe kontinuierlich belegten Funkressourcen in einer kaskadierenden Weise durch Verwendung mehrerer Ressourcenindikatorwerte in der Signalisierungsnachricht angezeigt werden; oder die Offset-Beziehung zwischen verschiedenen Planungsgruppen eine gemeinsame Kodierung in der Signalisierungsnachricht verwendet.

6. Verfahren nach einem der Ansprüche 1 bis 5, wobei die Basisstation die Signalisierungsnachricht an das Endgerät auf eine der folgenden Arten sendet:

eine Basisstation sendet eine Signalisierungsnachricht an das Endgerät; mehrere Basisstationen senden mehrere Signalisierungsnachrichten an das Endgerät; oder eine Basisstation sendet Signalisierungsnachrichten auf mehreren Ebenen an das Endgerät,

Im Idealfall entsprechen die verschiedenen Modi der Ressourcenzuweisung den Sendeverfahren der Signalisierungsnachricht.

7. Verfahren nach einem der Ansprüche 1 bis 6, wobei die Funkressourcen Frequenzbereichsressourcen umfassen, wobei die Frequenzbereichsressourcen mindestens eines von Teilbändern, Ressourcenblöcken oder Ressourcenblockgruppen umfassen.

8. Das Verfahren nach einem der Ansprüche 1 bis 7, wobei

die Anschlüsse für das Demodulationsreferenzsignal (DMRS), die den n Dateninformationsgruppen entsprechen, an dieselbe Dateninformationsgruppe gebunden sind; oder

die DMRS-Ports, welche den n Dateninformationsgruppen entsprechen, sind an verschiedene Dateninformationsgruppen gebunden.

9. Ein Verfahren zur Ressourcenzuweisung, das Folgendes umfasst:

Empfangen (3002) einer von einer Basisstation gesendeten Signalisierungsnachricht durch ein Endgerät, wobei die Signalisierungsnachricht dazu verwendet wird, einen Ressourcenzuweisungsmodus von n Dateninformationsgruppen, die von der Basisstation verwendet werden, anzuzeigen, und die Signalisierungsnachricht mindestens eines von Radio Resource Control, RRC, Signalisierung oder Downlink Control Information, DCI, Signalisierung umfasst, und wobei der Ressourcenzuweisungsmodus einen Modus eins und einen Modus zwei umfasst, wobei der Modus eins darin besteht, dass die von den n Dateninformationsgruppen verwendeten Funkressourcen vollständig überlappt sind, und der Modus zwei darin besteht, dass die von den n Dateninformationsgruppen verwendeten Funkressourcen vollständig nicht überlappt sind, und n eine ganze Zahl größer als 1 ist; und

Erfassen (3004) von Funkressourcen für den Empfang der n Dateninformationsgruppen durch das Endgerät gemäß der Signalisierungsnachricht,

**dadurch gekennzeichnet, dass**, wenn die Signalisierungsnachricht anzeigt, dass die Basisstation eine Ressourcenzuweisung unter Verwendung des Modus zwei durchführt, das Verfahren ferner umfasst:

Erfassen, durch das Endgerät gemäß der Signalisierungsnachricht, verschiedener Scheduling-Gruppen, die unterschiedlichen Dateninformationsgruppen entsprechen, und eine Offset-Beziehung zwischen verschiedenen Scheduling-Gruppen besteht; und

Erfassen, durch das Endgerät gemäß der Signalisierungsnachricht, mindestens einer von einer Startposition einer ersten Scheduling-Gruppe und einer Länge von Funkressourcen, die kontinuierlich von der ersten Scheduling-Gruppe besetzt sind, einer Offset-Beziehung zwischen den verschiedenen Scheduling-Gruppen oder eines Index der Offset-Beziehung zwischen den verschiedenen Scheduling-Gruppen.

10. Verfahren nach Anspruch 9, wobei die Offset-Beziehung zwischen verschiedenen Planungsgruppen, die Startposition der ersten Planungsgruppe und die Länge der von der ersten Planungsgruppe kontinuierlich belegten Funkressourcen eine gemeinsame Kodierung in der Signalisierungsnachricht verwenden; oder die Offset-Beziehung zwischen verschiedenen Planungsgruppen, die Startposition der ersten Planungsgruppe und die Länge der von der ersten Planungsgruppe kontinuierlich belegten Funkressourcen in kaskadierender Weise durch Verwendung mehrerer Ressourcenindikatorwerte in der Signalisierungsnachricht angezeigt werden; oder die Offset-Beziehung zwischen verschiedenen Planungsgruppen eine gemeinsame Kodierung in der Signalisierungsnachricht verwendet.

11. Computerlesbares Speichermedium, das ein gespeichertes Programm enthält, wobei das Programm Anweisungen enthält, die, wenn das Programm von einem Computer ausgeführt wird, den Computer veranlassen, das Verfahren nach einem der Ansprüche 1 bis 10 durchzuführen.

12. Eine Vorrichtung zur Ressourcenzuweisung, die Folgendes umfasst:

einen Prozessor; und

einen Speicher, der dazu konfiguriert ist, Anweisungen zu speichern, die durch den Prozessor ausführbar sind, wobei der Prozessor so konfiguriert ist, dass er die im Speicher gespeicherten Anweisungen ausführt, um das Verfahren nach einem der Ansprüche 1 bis 10 durchzuführen.

**Revendications**

1. Procédé d'allocation de ressource comprenant :

détermination (102), par une station de base, d'un mode d'allocation de ressources utilisé par n groupes d'informations de données, dans lequel le mode d'allocation de ressources comprend un mode un et un mode deux, le mode un étant que les ressources radio utilisées par les n groupes d'informations de données sont complètement superposées et le mode deux étant que les ressources radio utilisées par les n groupes d'informations de données ne sont complètement pas superposées, et n est un entier supérieur à 1 ;

mise en œuvre (104), par la station de base, d'une allocation de ressources en utilisant le mode d'allocation de ressources déterminé ; et

envoi, par la station de base, d'un message de signalisation à un terminal, dans lequel le message de signalisation étant utilisé pour indiquer le mode d'allocation de ressources utilisé par la station de base et le message de signalisation comprenant au moins l'une d'une information parmi la signalisation de contrôle des ressources radio, RRC, ou la signalisation de contrôle de liaison descendante, DCI,

**caractérisé en ce que** lorsque la station de base effectue l'allocation de ressources en utilisant le mode deux, différents groupes d'informations de données ont différents groupes de planification et une relation de décalage existe entre différents groupes de planification, le message de signalisation est en outre utilisé pour indiquer au moins l'un des éléments suivants : une position de départ d'un premier groupe de planification et une longueur de ressources radio occupées en continu par le premier groupe de planification, la relation de décalage entre différents groupes de planification, ou un index de la relation de décalage entre différents groupes de planification.

2. Procédé selon la revendication 1, dans lequel :
les différents groupes de planification sont en correspondance biunivoque avec les groupes d'informations de données et les différents groupes de planification sont utilisés pour indiquer les ressources radio réellement programmées pour être utilisées par les groupes d'informations de données.

**3.** Procédé selon la revendication 1, dans lequel la relation de décalage existe entre un (m+1)ème groupe de planification et au moins l'un du premier groupe de planification à un même groupe de planification, dans lequel $1 \leq m \leq n - 1$.

**4.** Procédé selon la revendication 3, dans lequel une première valeur de décalage existe entre une position de départ de ressources radio occupées en continu par le (m+1)ème groupe de planification et une position de fin de ressources radio occupées en continu par au moins l'un du premier groupe de planification au même groupe de planification ; ou

une seconde valeur de décalage existe entre une position de fin de ressources radio occupées en continu par le (m+1)ème groupe de planification et une position de départ de ressources radio occupées en continu par au moins l'un du premier groupe de planification au même groupe de planification ; ou
une première valeur de décalage existe entre une position de départ de ressources radio occupées en continu par le (m+1)ème groupe de planification et une position de fin de ressources radio occupées en continu par au moins l'un du premier groupe de planification au même groupe de planification ; ou
une quatrième valeur de décalage existe entre une position de départ de ressources radio occupées en continu par le (m+1)ème groupe de planification et une position de départ de ressources radio occupées en continu par au moins l'un du premier groupe de planification au même groupe de planification ; ou
une cinquième valeur de décalage existe entre une position de fin du (m+1)ème groupe de planification et une position de début du (m+1)ème groupe de planification ; ou
une sixième valeur de décalage existe entre la position de départ du (m+1)ème groupe de planification et la position de fin du (m+1)ème groupe de planification,
dans laquelle la première valeur de décalage, la seconde valeur de décalage, la troisième valeur de décalage et la quatrième valeur de décalage sont déterminées en fonction des ressources radio réellement utilisées par chacun des n groupes d'informations de données, la cinquième valeur de décalage et la sixième valeur de décalage sont déterminées en fonction des ressources radio réellement utilisées par un groupe d'informations de données correspondant au (m+1)ème groupe de planification.

**5.** Procédé selon l'une quelconque des revendications 2 à 4, dans lequel la relation de décalage entre différents groupes de planification et la position de départ du premier groupe de planification et la longueur des ressources radio occupées en continu par le premier groupe de planification utilisent un codage conjoint dans le message de signalisation ; ou la relation de décalage entre différents groupes de planification et la position de départ du premier groupe de planification et la longueur des ressources radio occupées en continu par le premier groupe de planification sont indiquées de manière en cascade en utilisant plusieurs valeurs d'indicateur de ressource dans le message de signalisation ; ou la relation de décalage entre différents groupes de planification utilise un codage conjoint dans le message de signalisation.

**6.** Procédé selon l'une quelconque des revendications 1 à 5, dans lequel la station de base envoie le message de signalisation au terminal selon l'une des manières d'envoi suivantes :

une station de base envoie un message de signalisation au terminal ; plusieurs stations de base envoient plusieurs messages de signalisation au terminal ; ou une station de base envoie des messages de signalisation à plusieurs niveaux au terminal,
de préférence, différents modes d'allocation de ressources sont en correspondance avec les modalités d'envoi du message de signalisation.

**7.** Procédé selon l'une quelconque des revendications 1 à 6, dans lequel les ressources radio comprennent des ressources de domaine de fréquence, dans lequel les ressources de domaine de fréquence comprenant au moins l'une des sous-bandes, des blocs de ressources ou des groupes de blocs de ressources.

**8.** Procédé selon l'une quelconque des revendications 1 à 7, dans lequel

signal de référence de démodulation, DMRS, les ports correspondant aux n groupes d'informations de données sont liés à un même groupe d'informations de données ; ou
les ports DMRS correspondant aux n groupes d'informations de données sont liés à différents groupes d'informations de données.

**9.** Procédé d'allocation de ressource comprenant :

réception (3002), par un terminal, d'un message de signalisation envoyé par une station de base, dans lequel le message de signalisation est utilisé pour indiquer un mode d'allocation de ressources de n groupes d'informations de données utilisés par la station de base, et le message de signalisation comprenant au moins une signalisation de contrôle de ressources radio, RRC, ou une signalisation d'informations de contrôle de liaison descendante, DCI, et dans lequel le mode d'allocation de ressources comprend un mode un et un mode deux, le mode un étant que les ressources radio utilisées par les n groupes d'informations de données sont complètement superposées et le mode deux étant que les ressources radio utilisées par les n groupes d'informations de données ne sont complètement pas superposées, et n est un entier supérieur à 1 ; et

acquisition (3004), par le terminal en fonction du message de signalisation, des ressources radio pour la réception des n groupes d'informations de données,

**caractérisé en ce que** lorsque le message de signalisation indique que la station de base effectue une allocation de ressources en utilisant le mode deux, le procédé comprend également :

l'acquisition, par le terminal en fonction du message de signalisation, de différents groupes de planification correspondant à différents groupes d'informations de données et une relation de décalage existe entre différents groupes de planification ; et

acquisition, par le terminal en fonction du message de signalisation, d'au moins l'une d'une position de départ d'un premier groupe de planification et d'une longueur de ressources radio occupées en continu par le premier groupe de planification, d'une relation de décalage entre les différents groupes de planification ou d'un indice de la relation de décalage entre les différents groupes de planification.

10. Procédé selon la revendication 9, dans lequel la relation de décalage entre différents groupes de planification, la position de départ du premier groupe de planification et la longueur des ressources radio occupées en continu par le premier groupe de planification utilisent un codage conjoint dans le message de signalisation ; ou la relation de décalage entre différents groupes de planification, la position de départ du premier groupe de planification et la longueur des ressources radio occupées en continu par le premier groupe de planification sont indiquées de manière en cascade en utilisant plusieurs valeurs d'indicateur de ressource dans le message de signalisation ; ou la relation de décalage entre différents groupes de planification utilise un codage conjoint dans le message de signalisation.

11. Support de stockage lisible par ordinateur, comprenant un programme stocké, dans lequel le programme comporte des instructions qui, lorsque le programme est exécuté par un ordinateur, amènent l'ordinateur à exécuter le procédé selon l'une quelconque des revendications 1 à 10.

12. Appareil d'allocation de ressources, comprenant :

un processeur ; et
une mémoire, qui est configurée pour stocker des instructions exécutables par le processeur,
dans lequel le processeur est configuré pour exécuter les instructions stockées dans la mémoire pour mettre en œuvre le procédé selon l'une quelconque des revendications 1 à 10.

FIG. 1

FIG. 2

A terminal receives a signaling message sent by a base station ⟋3002

The terminal acquires, according to the signaling message, the radio resources for receiving a data information group ⟋3004

FIG. 3

Determination module 20

Allocation module 22

FIG. 4

```
┌─────────────────────────────────┐
│     Determination module 20     │
└─────────────────────────────────┘
                │
┌─────────────────────────────────┐
│      Allocation module 22       │
└─────────────────────────────────┘
                │
┌─────────────────────────────────┐
│       Sending module 24         │
└─────────────────────────────────┘
```

FIG. 5

```
┌─────────────────────────────────┐
│      Receiving module 60        │
└─────────────────────────────────┘
                │
┌─────────────────────────────────┐
│     Acquisition module 62       │
└─────────────────────────────────┘
```

FIG. 6

| UE | | Base station 1 | Base station 2 |

201, Configure a
DCI message

202, Send a DCI message and
data corresponding to CW 1

202, Send data corresponding to CW 2

203, Acquire the DCI message, determine
whether to use a completely overlapping
mode or a completely non-overlapping
mode according to indication information
in the DCI message, and receive data
according to resource-allocation-related
signaling in the DCI message

FIG. 7

Frequency domain resource

| No.1 CW/TB | No.i CW/TB | No.1 CW/TB | No.i CW/TB | No.1 CW/TB | No.i CW/TB | No.1 CW/TB | No.i CW/TB |

Completely
overlapping

Completely non-
overlapping

FIG. 8

FIG. 9

FIG. 10

FIG. 11

FIG. 12

FIG. 13

FIG. 14

Resource allocation signaling (bits)
in a DCI message

Indicate the resource
allocation of CW 2

▨ Indicate a first offset value   ◩ Indicate the length of continuously
occupied resources

⊟ Jointly indicate positiveness and negativeness of the
first offset value and the second offset value

▦ Indicate the resource allocation of CW 1

## FIG. 15

| UE | Base station 1 | Base station 2 | Base station 3 |
| --- | --- | --- | --- |

601, Configure an
RRC message and a
DCI message

←—602, RRC message—

603, Send the DCI message and
data corresponding to CW 1

←———603, Send data corresponding to CW 2—

←———603, Send data corresponding to CW 2—

604, Acquire the RRC message,
determine whether to use a
completely overlapping mode or a
completely non-overlapping mode,
acquire the DCI message, and receive
data according to resource-allocation-
related signaling in the DCI message

## FIG. 16

Resource allocation signaling (bits)
in a DCI message

Indicate the resource          Indicate the resource
allocation of CW 2            allocation of CW 3

Indicate first offset value 1                    Indicate second offset value 1

Indicate positiveness and                        Indicate positiveness and
negativeness of first offset value 1             negativeness of second offset value 1

Indicate the resource allocation of CW 1

Indicate first offset value 2                    Indicate second offset value 2

Indicate positiveness and                        Indicate positiveness and
negativeness of first offset value 2             negativeness of second offset value 2

FIG. 17

First offset value 1

First scheduling group

CW 1

CW 2

Second scheduling group

CW 3

Third scheduling group

Second offset value 2

Frequency-domain resources (0–49)

FIG. 18

Second scheduling
group              First offset value 1

CW 2

CW 1

First scheduling group

CW 3

Third scheduling group

Second offset value 2

Frequency-domain resources (0–49)

FIG. 19

Resource allocation signaling (bits) in
a DCI message

⧄ Indicate first offset value 1   ⧅ Indicate second offset value 1

⊞ Jointly indicate positiveness and negativeness of first
offset value 1 and first offset value 2

⊟ Jointly indicate positiveness and negativeness of
second offset value 1 and second offset value 2

▓ Indicate the resource allocation of CW 1

⊓ Indicate first offset value 2   ⊠ Indicate second offset value 2

⊞⧄⊟⧅ Indicate the resource allocation of CW 2

⊞⊓⊟⊠ Indicate the resource allocation of CW 3

FIG. 20

FIG. 21

```
┌──────────┐        ┌──────────┐        ┌──────────┐
│    UE    │        │Base station│       │Base station│
│          │        │    1     │        │    2     │
└──────────┘        └──────────┘        └──────────┘
     │                   │    ◁═══════════════▷│
     │                   │                     │
     │              ┌────┴─────────┐           │
     │              │501, Configure a DCI│     │
     │              │   message    │           │
     │              └────┬─────────┘           │
     │                   │                     │
     │  ◀502, Send the DCI message and         │
     │    data corresponding to CW 1│          │
     │                   │                     │
     │  ◀──────502, Send data corresponding to CW 2──────│
     │                   │                     │
┌────┴──────────┐        │                     │
│503, Acquire the DCI│   │                     │
│  message and  │        │                     │
│ determine DMRS│        │                     │
│port information and│   │                     │
│  receive data │        │                     │
└────┬──────────┘        │                     │
     │                   │                     │
```

FIG. 22

Resource allocation signaling (bits) in a
DCI message

▢ Jointly indicate positiveness and
  negativeness of the offset value

▦ Jointly indicate a resource allocation
  mode 2 of CW 1/CW 2

FIG. 23

S1

FIG. 24

Resource allocation signaling (bits)
in a DCI message

FIG. 25

Resource allocation signaling (bits) in a
DCI message

FIG. 26

**REFERENCES CITED IN THE DESCRIPTION**

**Non-patent literature cited in the description**

- **ASTRI**. Discussion on enhancement to resource allocation for NC-JT. *3GPP DRAFT; R1-1707188*, 04 May 2017